(19) 

**Europäisches Patentamt**
**European Patent Office**
**Office européen des brevets**

(11) **EP 2 261 458 A1**

(12) **EUROPEAN PATENT APPLICATION**

(43) Date of publication:
**15.12.2010 Bulletin 2010/50**

(51) Int Cl.:
*E21B 21/00* (2006.01)     *E21B 33/138* (2006.01)
*E21B 43/267* (2006.01)

(21) Application number: **09290413.5**

(22) Date of filing: **05.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicants:
• **Services Pétroliers Schlumberger**
  **75007 Paris (FR)**
  Designated Contracting States:
  **FR**
• **Schlumberger Technology B.V.**
  **2514 JG  The Hague (NL)**
  Designated Contracting States:
  **BG CZ DE DK GR HU IE IT LT NO PL RO SI SK TR**
• **Schlumberger Holdings Limited**
  **Tortola (VG)**
  Designated Contracting States:
  **GB NL**
• **Prad Research And Development Limited**
  **Tortola (VG)**
  Designated Contracting States:
  **AT BE CH CY EE ES FI HR IS LI LU LV MC MT PT SE**

(72) Inventors:
• **Shindgikar, Nikhil**
  **75015 Paris (FR)**
• **Lee, Jesse**
  **75015 Paris (FR)**
• **Kefi, Slaheddine**
  **78140 Velizy Villacoublay (FR)**
• **Cambus-Brunet, Chrystel**
  **78550 Richebourg (FR)**
• **Ermel, Michel**
  **78470 St Lambert des Bois (FR)**

(74) Representative: **Vandermolen, Mathieu**
  **Intellectual Property Department**
  **Etudes & Productions Schlumberger**
  **1, rue Henri Becquerel**
  **B.P. 202**
  **92142 Clamart Cedex (FR)**

(54) **Engineered fibres for well treatments**

(57)     The present invention pertains to the use of mixtures of fibers and solid particles to cure fluid losses and lost circulation. A method involving such fibers and solid particles is disclosed. The mechanism for curing lost circulation and fluid losses is described in detail.

*FIG. 1*

EP 2 261 458 A1

## Description

## Background of the Invention

In many well treatments it is necessary to inject a fluid into the well under pressure. If some or all of the fluid leaks out of the wellbore, this is termed "fluid loss". If the treatment is one, such as drilling, in which the fluid is supposed to be returned to the surface, if some or all of the fluid does not return due to fluid loss, this is called "lost circulation". Lost circulation is a decades-old problem but there is still not a single solution that can cure all lost circulation problems. There are many products and techniques available, such as polymer pills and cement plugs, to cure lost circulation issues. One of the simplest approaches is to use a lost circulation material (LCM) in the drilling fluid and/or in the cement or polymer system. LCM systems often contain fibers. One of the major advantages of using fibers is the ease with which they can be handled. There is a wide variety of fibers available to the oilfield; most commonly used are natural celluloses, synthetic polymers, and ceramics, minerals or glass. All are available in various shapes, sizes, and flexibilities. Fibers decrease the permeability of a loss zone by creating a porous web or mat that filters out solids in the fluid, forming a low permeability filter cake, which can plug or bridge the loss zones. In typical systems, a very precise particle size distribution must be used with a given fiber to achieve a suitable filter cake. Even though the use of various types of fibers is common, the success rate and the efficiency are not always satisfactory with fibers currently used. There is a need for fibers that are less sensitive to the particle sizes in the fluids, that can block wide fractures even when the particles are small, that can survive changes in pressure, that can control spurt (the large amount of fluid often lost very quickly as the filter cake is being formed) and/or that can control the total fluid loss.

## Summary of the Invention

A method is given for blocking fluid flow through a pathway in a subterranean formation penetrated by a wellbore. The method includes selecting compositions, concentrations and dimensions of stiff fibers and solid plugging particles, preparing a blocking fluid containing the stiff fibers and the blend of the solid plugging particles, and forcing the blocking fluid into the pathway. The pathway typically has one dimension across it of at least about 1 mm. The stiff fibers form a mesh across the pathway and the solid particles plug the mesh and block fluid flow. The blocking fluid preferably contains mica, and the solid plugging particles preferably include calcium carbonate.

In one embodiment, the stiff fibers preferably have a Young's Modulus of from about 0.5 to about 100 GPa, more preferably from about 1 to about 80 GPa. The stiff fibers preferably have a shortest cross-sectional distance of from about 80 to about 450 microns. The stiff fibers preferably have a length of from about 5 to about 24 mm. The stiff fibers have a value of the parameter $Ed^4/WL^3$ in which E is the modulus, d is the diameter, W is the force causing a deflection, and L is the length, of from about 2 to about 400,000 times the value of that parameter for a fiber having a modulus of 65 GPa, a diameter of 20 microns, and a length of 12 mm. In the method, the stiff fiber concentration preferably is from about 2.85 kg/m$^3$ to about 42.8 kg/m$^3$. The fluid preferably also contains fibers that are selected from non-stiff fibers, differing stiff fibers, or both. The non-stiff fibers preferably have a Young's Modulus of from about 0.5 to about 10 GPa and a shortest cross-sectional distance of from about 10 to about 100 microns. The total fiber concentration is preferably from about 2.85 to about 42.8 kg/m$^3$.

In another embodiment, the concentration or composition of the stiff fibers is varied during the treatment. In yet another embodiment, the pathway is a hydraulic fracture and the fluid flow is blocked away from the wellbore.

## Brief Description of the Drawings

**Figure 1** shows the modified fluid loss cell used.

**Figure 2** illustrates one form of slot used.

**Figure 3** shows a comparison of fibers tested with 2 mm holes.

**Figure 4** shows a comparison of fibers tested with a 2 mm slot.

**Figure 5** shows results with fibers plus mica with a 2 mm slot.

**Figure 6** shows a comparison of fibers tested with a 3 mm slot.

**Figure 7** shows the effect of rate of pressure application a with 2 mm slot.

**Figure 8** compares results with one fiber and a grid with a 3 mm slot or a grid with three slots (3, 2, and 1 mm).

**Figure 9** shows a comparison of fibers with a 2 mm slot in a fluid of lower Solids Volume Fraction.

**Figure 10** shows a comparison of suitable and unsuitable fibers in a 2 mm slot.

**Figure 11** shows a comparison of suitable and unsuitable fibers in a 3 mm slot.

**Figure 12** shows a comparison of fibers using a combination of 1 mm, 2 mm and 3 mm slots.

**Figure 13** shows a comparison of fibers in an oil-based mud.

**Figure 14** shows a comparison of fibers with direct application of high pressure.

**Figure 15** shows fiber efficiency as a function of fiber concentration.

**Figure 16** shows fiber performance with varying Solids Volume Fractions.

**Figure 17** shows results of including coarse particles at constant Solids Volume Fraction.

**Figure 18** shows the effect of addition of mica flakes on the efficiency of stiff fibers.

**Figure 19** shows fluid loss control as a function of varying the Particle Size Distribution of the added particles in a water-based fluid.

**Figure 20** shows fluid loss control as a function of varying the Particle Size Distribution of the added particles in an oil-based fluid.

**Figure 21** shows the efficiency retained by stiff fibers at low Solids Volume Fraction.

**Figure 22** shows the synergy between flexible and stiff fibers.

**Figure 23** shows that stiff fibers are much more stable than brittle or flexible fibers at high pressure drops.

**Detailed Description of the Invention**

Although some of the following discussion emphasizes blocking fractures encountered in drilling, the fibers and methods of the invention can be used in drilling fluids, cements, spacers and other operations in which fluid loss or lost circulation are encountered. The invention will be described in terms of treatment of vertical wells, but is equally applicable to wells of any orientation. The invention will be described for hydrocarbon production wells, but it is to be understood that the invention can be used for wells for production of other fluids, such as water or carbon dioxide, or, for example, for injection or storage wells. It should also be understood that throughout this specification, when a concentration or amount range is described as being useful, or suitable, or the like, it is intended that any and every concentration or amount within the range, including the end points, is to be considered as having been stated. Furthermore, each numerical value should be read once as modified by the term "about" (unless already expressly so modified) and then read again as not to be so modified unless otherwise stated in context. For example, "a range of from 1 to 10" is to be read as indicating each and every possible number along the continuum between about 1 and about 10. In other words, when a certain range is expressed, even if only a few specific data points are explicitly identified or referred to within the range, or even when no data points are referred to within the range, it is to be understood that the inventors appreciate and understand that any and all data points within the range are to be considered to have been specified, and that the inventors have possession of the entire range and all points within the range.

The inventors have surprisingly found that in the use of mixtures of fibers and solid particles to cure fluid losses and lost circulation, an important factor in the selection and use of suitable fibers is that they must not be too flexible (bend too easily) or too brittle (break too easily) for their length. In the present disclosure the terms "stiff" will be used for suitable fibers; by stiff, it is to be understood that the fibers are neither too flexible nor too brittle. The stiff fibers of the invention, suitable for curing even total lost circulation situations in oilfield operations, must have a specific combination of elastic modulus (as will be discussed in detail below), diameter or other cross-sectional dimension, and length. The suitability of fibers can also be determined by their chemical compositions and states (for example crystallinity), their dimensions, and their shapes, for example cross-sectional shapes. Suitable stiffness is preferably a function of Young's Modulus, length, and diameter (or longest cross-sectional dimension if not circular); these factors can compensate for one another. For example, a low Young's Modulus fiber can be "stiff" if it has a sufficiently large diameter or is sufficiently short. Suitable fibers generally have a Young's Modulus of from about 0.5 to about 100 GPa, preferably from about 1.0 to about 80 GPa, more preferably from about 1.0 to about 10 GPa and most preferably from about 1.5 to about 4 GPa, a diameter (or, if not circular the longest cross-sectional dimension) of about 80 to about 450 microns, preferably about 100 to about 400 microns, and a length of about 5 to about 24 mm, preferably about 6 to about 20 mm. Suitable fibers have a "stiffness" to be more precisely defined below of about 100 to about 3000 times that of the glass fibers used in the experiments described below, which typically have a 20 micron diameter and a Young's Modulus of about 65 GPa. Fibers, according to the present invention, are used with a blend of plugging particles that may be either already present in the fluid or added to the fluid with the fibers. The particle size distribution (PSD) of the blend of particles can optionally be optimized.

Although the experiments in the accompanying examples were done with water-based fluids, the combination of suitable fibers and a blend of particles can be used in either oil-based or water-based fluids, for example muds, polymer pills, cementitious materials and spacers, to cure lost circulation and fluid loss problems. Optionally, wetting agents can be used to ensure that the materials are oil-wettable in oil-based muds or water-wettable in water-based muds. It will be within the general knowledge of the skilled person to perform laboratory tests to ensure compatibility with the fluid, that the fluid can transport the particles at the required pumping rates, and suitability for the size of the openings in the fluid loss pathways to be plugged.

The fibers can be used without problems before or during operations such as cementing. Unlike fibers from the art, the stiff fibers and methods of the invention are less sensitive to the particle sizes and fiber concentrations used, they better resist changes in pressure, they give robust performance in terms of reproducibility, spurt control and fluid loss control, and they can cover wide fracture widths where other fibers fail. By wide fracture widths it is to be understood is meant widths of from about 1 mm to about 6 mm. The fibers and methods of the invention provide solutions to, for example, curing lost circulation of fluids downhole, fluid loss in gravel packing, proppant flowback in fracturing, fluid loss in wellbore consolidation treatments, cracking of cements, and other problems in oilfield operations.

Although many types, sizes, and shapes of fibers have been used in the art, the performance of all fibers depends mainly on the solids content of the fluids, which generally has had to be high; the concentration of the fibers, which generally has had to be high, especially to plug wide fractures; and a carefully selected and metered particle size distribution.

The stiff fibers and methods of the invention make these factors less critical. The fibers and methods of the invention can be used at lower fiber concentrations, and they can be used with less dependence on the solids content and on the solids particle size distribution in the fluid. On the other hand, careful attention to these factors results in less spurt and fluid loss than with LCM systems from the art.

The fibers and methods of the invention can be used to plug many fracture widths, without the need to adjust the system variables, and with a variety of pressure drops across the filter cakes formed. The plugs easily sustain high pressure drops without failing. Without being bound by any theory, it is believed that stiff fibers according to the present invention are not dependent on the optimized Packing Volume Fraction concept, and they can be designed to promote internal plugging by filter cakes either away from the wellbore or at the wellbore face to build thick filter cakes.

Fluid losses are generally classified in four categories. For example, in drilling, seepage losses are characterized by losses of from about 0.16 to about 1.6 $m^3$/hr (about 1 to about 10 bbl/hr) of mud. They happen very slowly and can be confused with cuttings removal at the surface. Seepage losses sometimes happen in the form of filtration to a highly permeable formation. A conventional LCM, particularly sized particles, is sufficient to cure this problem. If formation damage or stuck pipe is the primary concern, attempts must be made to cure losses before proceeding with drilling. Losses greater than seepage losses but less than about 32 $m^3$/hr (about 200 bbl/hr) are defined as partial losses. In almost all circumstances when losses of this type are encountered, regaining full circulation is required. Sized solids alone may not cure the problem and fibers are often needed. When losses are between about 32-48 $m^3$/hr (200-300 bbl/hr), they are called severe losses and conventional LCM systems may not be enough to handle these losses. Severe losses particularly occur with wide fracture widths. As with partial losses, regaining full circulation is required. Traditional treatments for severe losses include spotting of conventional LCM or viscous pills if conventional treatments are not successful. The fourth category is total losses, when the fluid loss is more than about 32 $m^3$/hr (about 300 bbl/hr). Total losses can be due to large caverns or vugs. In this case fibers and sized solids alone might be ineffective and the common solution is to switch to cement plugs and/or polymer pills, to which fibers can be added for improved performance. An important factor in practice is the uncertainty in the distribution of zones of these types of losses, for example, a certain size fracture can result in severe loss or total loss depending on the number of such fractures downhole.

Without wishing to be bound by any theory, the inventors believe that the mechanism of fibers in helping to form strong filter cakes is based on three aspects:

1. The fiber should disperse well enough in the fluid so that it can build or create a fiber mesh network uniformly across the loss zone or zones, for example fracture widths.

2. The fiber mesh should then be plugged with a blend of solid particles to form a filter cake. The solids blend can optionally be optimized, that is, designed according to the porous structure created by the fibers, the porous structure being a function of the fiber properties, such as aspect ratio and elastic modulus.

3. The filter cake of fiber mesh and solids should withstand changes in pressure downhole. Changes in pressure can occur, for example, due to pipe movements or changes in hydrostatic pressure. Erosion may be caused by fluid circulation in the annulus. Ideally, the filter cake should be able to withstand the pressure changes and tangential erosion flow downhole.

The inventors also believe that the solid particles in the fluid plug the porous structure of the mat or mesh created by the contact points where the fibers cross one another; the sizes of the openings between the contact points are a function of the fiber diameter and aspect ratio. Stiff fibers having an aspect ratio in the range of about 10 to about 300, can create a dense and homogeneous porous structure (mesh) of fibers that has a large number of contact points, thus reducing the required size of the solid particles to be used to plug the porous structure. The homogeneous mesh formed by stiff fibers does not require a specific particle size distribution to plug, therefore the stiff fibers can be used with particles having a wide range of size distributions. For non-stiff fibers, the porous structures are not well-defined, and experimental results indicate that they require more specific size distributions. Preferably, the particle size distribution of the particles can be chosen, or the particles already in the fluid can be augmented, to take the porous nature of the fiber mesh into account.

The present inventive system using stiff fibers and particle blends is useful for curing fluid losses into fissures, natural fractures, and small vugs. The dispersed fibers, homogeneously dispersed or flocculated, dehydrating and coming together into a clump, reduce the permeability of the loss zone or zones by creating a fibrous mesh. Fiber shape, surface properties and stiffness help to determine the extent of dispersion; for example, for a given fiber concentration and aspect ratio, fibers with different shapes and stiffnesses will exhibit different dispersion characteristics.

The solids in the fluid, including small cuttings if present, are trapped in the pores of the fibrous net. The larger the diameter of the fibers, the larger the openings (pores) in a mesh formed by the fibers. (The openings between the contact points in a mesh of small diameter fibers are smaller than those between the contact points in a mesh of larger diameter fibers.) The flexibility of the fibers can also have an influence. Then, fibers having higher aspect ratios generally have a larger number of contact points per individual fiber compared to fibers having lower aspect ratios. Furthermore, fibers that are not "stiff", for example typical multifilament polymer fibers such as those made of polypropylene, are flexible and can bend and overlap with neighboring fibers; this increases the diameter of the particles required to plug the openings between the contact points of a stiff fiber mesh. However, stiff fibers, for example those made of polyvinyl alcohol (for example, the R1 fiber used in the experiments described below) do not bend as easily and require fewer or no coarse particles.

Although one aspect of the stiff fibers and methods of the invention is that the size distribution of the particles used to plug the mesh of fibers need not be as carefully selected and metered as with fibers from the art, the blend of solid particles preferably includes coarse, medium, and fine particles. The coarse particles in the blend are preferably coarse carbonates having an average particle size above about 180 microns and below about 1000 microns; most preferably they have a particle size of between about 700 and about 850 microns. Particles, for example carbonate particles, having an average particle size of between about 30 and about 180 microns, preferably about 150 and about 180 microns, for example about 130 microns, can be used for the medium particles. The fine particles are preferably microfine carbonate particles having sizes below about 30 microns, preferably having an average particle size of from about 10 to about 20 microns. The principle advantage of the fine particles is that they facilitate metering and handling of the blend; alternatively, the fine particles can be left out if the equipment can handle blends of medium and coarse particles. If the fine particles are required and can invade small formation pores, non-damaging particles are preferably used. The optimum ratio of the coarse/medium/fine particles varies, depending on the type of fiber. The carbonate is most preferably calcium carbonate; other carbonates can be used.

The solid particles can be selected by one skilled in the art from any types of particles used in oilfield fluids and muds and are not limited to calcium carbonate; other materials can be used, for example mica and cements. Mixtures of different types of particles can be used. Non-limiting examples of other suitable particles for use as components of the blend of solid particles include mica, rubber, polyethylene, polypropylene, polystyrene, poly(styrene-butadiene), fly ash, silica, mica, alumina, glass, barite, ceramic, metals and metal oxides, starch and modified starch, hematite, ilmenite, microspheres, glass microspheres, magnesium oxide, gilsonite, cement, microcement, and sand.

Although other materials can be used, particularly suitable components of the particle blend are mica flakes, which can be used in any one, any two, or all three of the coarse, medium, and fine size ranges described above, preferably in a concentration range of from about 2 weight per cent to about 10 weight per cent of the particles; calcium carbonate, for example with particle size distributions centered around about 10 microns, 65 microns, 130 microns, 700 microns, or 1000 microns, (or, in the coarse, medium, and fine ranges) in a concentration range of from about 5 weight per cent to about 100 weight per cent of the particles; nut plug, preferably in the medium or fine size ranges and in a concentration range of from about 2 weight per cent to about 40 weight per cent; graphite or gilsonite in a concentration range from about 2 weight per cent to about 40 weight per cent; light weight materials such as polypropylene or hollow or porous ceramic beads in a concentration range of from about 2 weight per cent to about 50 weight per cent; cement slurries having densities of from about 1.0 to about 2.2 kg/L (about 8.5 to about 18 lb/gal); and sand proppants having sizes from about 50 microns to about 1000 microns.

Many sizes and shapes of stiff fibers can be used. Stiff cylindrical fibers preferably have an aspect ratio in the range of about 10 to about 300. Stiff rectangular fibers preferably have a thickness of from about 20 microns to about 100 microns and a width of from about 100 microns to about 450 microns and a fiber length between about 5 mm and about 24 mm. The elastic modulus of the stiff fibers according to the present invention is important and in fact it is desirable for the fiber to deform just enough under shear or restriction so that it will not break. On the other hand, fibers with too high elastic modulus in general cannot resist deformation without rupturing when pumped through restrictions; for example, glass fibers with approximately 65 GPa elastic modulus break into pieces when pumped through restrictions during oilfield treatments. It is known that sufficient solids contents and particular particle sizes are necessary for fibers to work. In the prior art, pressure drop is essential to enhance the filtering process, and the fiber plug performance can change with pressure drop. Then, having high solids content is one of the important criteria for fibers to work, but particle size distribution and solids size optimization is even more critical.

The stiff fibers and methods of the invention do not necessarily need coarse particles to plug severe fracture widths, and their stiffness plays a very important role in plugging severe fracture widths; for example, stiff fibers can plug 3 mm fractures without coarse particles. This is unique, as prior art fibers, for example glass and polymer monofilament fibers, need 20 volume per cent coarse particles with 25 per cent total fluid solids content to plug fracture widths of 2 mm. Flexible fibers still cannot plug 3 mm fractures, even with further increases in the concentration of coarse particles.

The use of the stiff fibers and methods of the invention minimizes the necessity of using large diameter particles to plug larger fracture widths; stiff fibers work effectively with suitable concentrations of medium particles or with a combination of medium and coarse particles. However, an optional optimized solids blend for a particular type of stiff fiber can provide a solution to the uncertainty of fracture widths and numbers downhole.

The use of the stiff fibers and methods of the invention extends the solids concentration boundaries, and sizes of solid particles different from those necessary with prior art fibers, are sufficient to plug certain stiff fiber meshes. The different solid particles and additives present in drilling fluids and cement slurries typically have sizes in the range of from about 10 microns to about 1000 microns. The base fluid can be designed in such a way that it contains conventional LCM's, for example multi-modal sizes of particles of calcium carbonate or gilsonite, different sizes of mica flakes or nut plug, etc., and the solids content of the fluid ranges from about 10 per cent to about 60 per cent, and with the use of stiff fibers the need for solids optimization is clearly reduced. Typically stiff fibers are monofilaments; flexible fibers are generally multifilaments for ease of handling, for example are sold as tows.

Stiffness is proportional to the Elastic Modulus of a fiber, and is generally known as the resistance to deformation. Fiber stiffness is one of the main characteristics of a fiber that can affect fiber performance; determination of fiber stiffness will be discussed in detail in the experimental section here after. Higher relative humidity and temperature adversely affect fiber stiffness. Stiff or, to some degree, thicker fibers help create a good mechanical barrier or anchor in a fracture, and particles or flexible fibers, preferably optimized in size and/or shape, effectively reduce the pore sizes between the stiff fibers. It is important to note that a "stiff" fiber is not necessarily a hard or mechanically strong fiber. Suitable stiff fibers can have a Young's Modulus of from about 0.5 to about 100 GPa; preferred stiff fibers have a Young's Modulus in the range of from about 1.0 to about 80 GPa, and most preferably from about 1.5 to about 4 GPa. Such types of fibers (for their length and diameter) will be flexible enough to bend without breaking under oilfield conditions. Polymers such as polypropylene, nylon, and polyvinyl alcohol can fall within this range. A combination of low Young's Modulus and greater diameter, hence higher surface area, than micron-diameter fibers is highly preferred if the length is suitable.

"Stiff" fibers in the context of the present invention have a "stiffness" as defined below. The stiffness needed for fibers to perform satisfactorily up to fracture widths of 6 mm with solid particles present at only from about 20 per cent to about 25 per cent solid volume fraction of fluid (SVF), at conditions under which typical glass fibers and multifilament polypropylene fibers fail instantly, is from about 2 to about 400,000, preferably from about 4 to about 12,000, and most preferably from about 80 to about 2,500 times the stiffness of 20 micron glass fibers. Glass fibers of typical diameters are not suitable, because of the high elastic modulus of glass, typically from 50 to 90 GPa. Glass is brittle, not flexible, and cannot withstand higher pressures across a fiber mesh; for example 3.45 MPa (500 psi) will rupture the glass fibers. "Flexible mono-filament" fibers, are not brittle, but generally are not stiff enough because their diameters are typically in the range of 10 to 80 microns, which makes them extremely flexible, and they tend to deform too much and fail under high test pressures. On the other hand, it should be borne in mind that bundles of fibers can have properties different from individual fibers. For example, a bundle of several micron-sized flexible propylene fibers bonded together into a single strand can be a "stiff" fiber of the invention.

In a preferred embodiment, two (or more) different fibers can be used in the invention; in the present context, they will be termed primary and secondary fibers. The primary fibers must be stiff fibers but may be of any composition that provides suitable properties; the secondary fibers can be any fibers, stiff or not. When properly chosen, the primary and secondary fibers can act synergistically. Stiff fibers preferably have lengths of from about 5 mm to about 24 mm, most preferably from about 6 to about 20 mm. Stiff fibers of the invention include but are not limited to materials such as polypropylene, nylon, glass, Kevlar, and crosslinked polyvinyl alcohol; they are commercially available in different diameters and shapes. The specific gravity of stiff fibers is preferably in the range of from about 0.90 to about 1.5, although denser materials can be used, for example certain metal ribbons like iron or aluminum alloys. The secondary fiber can be an organic or synthetic type of fiber, for example with a Young's Modulus in the range of from about 0.5 GPa to about 100 GPa, preferable 0.5GPa to 10GPa; a diameter of from about 10 microns to about 100 microns, preferably about 10 microns to about 50 microns, and a length of from about 5 mm to about 24 mm, preferably from about 6 mm to about 20 mm, for example polypropylene, novoloid, kevlar, glass, nylon, polyamide, polylactic resin, polyvinyl alcohol, polyester, and cellulose. Secondary fibers can be fibrillated. The primary and secondary fibers can be of any fiber shape, for example round, cylindrical, ribbon-like flat, coil-like spiral, trilobe, star shape, disoriented or irregular. The secondary fiber can also be a reactive fiber which can form a sticky fibrous net at certain temperatures, for example polyvinyl alcohol or polylactic resin. A suitable total fiber concentration is in the range of from about 2.85 to about 42.8 kg/m$^3$ (about 1 to about 15 lb/bbl), preferably from about 5.7 to about 22.8 kg/m$^3$(about 2 to about 8 lb/bbl). The suitable ratio of primary to secondary fibers is from about 95/5 to about 30/70 by fiber volume; more preferably from about 90/10 to about 50/50. The primary and secondary fibers do not necessarily need to have two different chemical compositions. For example, nylon having a Young's Modulus of 4 GPa and a diameter of 150-400 microns can be the primary (stiff) fibers and flexible multifilament nylon fibers with a diameter of 50 microns can be the secondary fibers.

There are many benefits of fiber blend including (a) that it is compatible with a wider range of particles, in other words, it is less sensitive to the PSD of the plugging particles, (b) that the fiber blend creates a unique plug because the flexible fibers invade the fracture and thus anchor the plug, which subsequently provides much better stability in terms of resisting erosion, and (c) that the incorporation of flexible fibers (in this case, thin fibers), also helps to suspend the thicker, stiff fibers, that could otherwise not be used alone because they would settle during injection.

Turning now to the filter cake, one of the problems with filter cakes, even those including fibers, is that once the filter cake is formed, fluid circulation can erode the surface of the filter cake by tangential flow; however, with a well-tuned system, stiff fibers can cause the plug to form internally, rather than at the entrance to the fracture, so that erosion cannot happen. However, high fiber concentrations can pose operational issues at the rig site, for example plugging of mixing equipment, or pump cavitation. The stiff fiber concentration used in the field should be in the range of about 2.85 kg/m$^3$ to about 28.5 kg/m$^3$ (about 1.0 lb/bbl to about 10.0 lb/bbl) without increasing the apparent viscosity of the fluid and compromising fluid pumpability.

It is highly preferred that the fibers follow the three-step mechanism to build filter cake (as described earlier) to address lost circulation solutions effectively. In fact, failures in any part of this three-step process can result in a plug failure. Fiber characteristics such as their stiffness play a vital role in plug performance. Stiff fibers resist more pressure with a smaller deflection, can build a structure corresponding to the fracture width, and trap optimized solids. Having stiff primary fibers can also provide mechanical anchoring to other (secondary) fibers when both are used. It is equally important for the stiff fibers (for example having diameters in the range of about 80 microns to about 450 microns) to have a sufficiently low Young's Modulus that they can be pumped through small restrictions while minimizing any breakage or blockage concerns.

The inventors have established that for a given type of fiber or fiber blend, increasing the fiber concentration improves the efficiency of fluid loss control. In addition to increasing the fiber concentration to achieve better fluid loss control, the Solid Volume Fraction (SVF) of particles in the fluid can also be increased, i.e. adding more sized solids, to improve the fluid control efficiency. Alternatively, increasing the particle size of the added solids can also improve the overall efficiency of fluid loss control. Note that it would be necessary to ensure that the overall particle size distribution of the added particles was still in the suitable working range, otherwise simply increasing the particle size would not result in increased efficiency. Plate-like material can also be used to control the fluid loss better.

The inventors have also established that for a given fiber or fiber blend, the Particle Size Distribution (PSD) of the added particles governs the permeability of the plugged bridging fiber network. The selection of the proper PSD of the added particles is based on the pore size distribution of the fiber network, and therefore depends on structural parameters of the fibers. However, even if the PSD of the particles is properly engineered, then an adequate concentration of particles in the fluid is still needed in order to achieve fluid loss control. As previously mentioned, the optimal PSD range depends on the structure of the fibers; for example, when thinner and more flexible fibers are used, addition of coarser particles is needed to control the fluid loss. There is a minimum Solids Volume Fraction of the fluid for the fibers to be effective; for a given fiber system, any SVF above the minimum is suitable. The suitable SVF is between about 10 and about 50 percent, and preferably is between about 20 and about 40 percent. The fluid pumpability might become an issue if SVF exceeds these limits.

The stiff fibers and solids are added to the drilling fluid (mud) in any order and with any suitable equipment to form the treatment fluid. (If the fluid already contains some or all of the solids necessary to form a filter cake on the mesh of stiff fibers, this is taken into account.) Typically the fluid containing the fibers and solids is mixed before pumping downhole. The fibers can be added and mixed and then the solids added and mixed, or *vice versa,* or both fibers and solids can be added before mixing. It may be found that one of the components aids in the suspension and/or dispersion of the other, in which case the component that aids is mixed into the fluid first. Typically the treatment fluid is weighted to approximately the same density as the fluid previously injected into the well to minimize migration of the treatment fluid and minimize mixing with the previously injected fluid. A weighting material can optionally be added to the fluid, the fibers, or the solids at any point. The treatment fluid can be added in a discrete amount, for example as a pill, or can be added until lost circulation or fluid loss is satisfactorily reduced. The treatment fluid is spotted adjacent to the location of the lost circulation, if known, by methods known in the art.

The fluid containing the mixture of stiff fibers and solids can be injected in several stages in which the relative amounts of solids and fibers varies from stage to stage. Optionally, the stiffness of the stiff fibers can also be less than optimal and then be increased to a suitable stiffness during the treatment. For example the concentration of stiff fibers can be selected in the range of zero to a lower-than-optimal concentration of stiff fiber in the first stage or stages of the treatment. A suitable low concentration can be determined by measuring the minimal effective concentration of the stiff fiber necessary to form a mesh across a specific fracture size and then using a concentration in the range of from about 10 to about 90 percent of that minimal effective blocking concentration. The low concentration selected should be tested in the same equipment to validate the non-blocking effect of the treatment. The treatment with low concentration of the stiff fiber is followed with a treatment with an effective concentration of stiff fibers capable of rapid blockage. Effective concentrations can be determined by experiments like those described here after. As a result, treatment with the effective concentration blocks the fracture at or near the wellbore and the low concentration stiff fiber plugs the fracture at a bottleneck deeper in the fracture. In another case, in addition to a change in the stiff fiber concentration, the amount and/or size distribution of the plugging solid particles can also be decreased. In general, whenever any changes are made in the concentration or nature of the fibers, the concentration and particle size distribution of the plugging solids should be re-evaluated. The low concentration treatment can be designed in such a way that it blocks certain fracture sizes lower than the original fracture size. For example, the initial low concentration treatment can be designed to treat a 1 mm fracture and the following treatment can be designed to treat a 4 mm fracture. For example, for a 1mm fracture using zero to a low concentration of stiff fibers can be sufficient. When any of these strategies is followed, the treatment forms the blockage at least at two different depths in a fracture or in pores (one close to or at the wellbore and another at a different depth in the fracture or pores away from the wellbore) rather than only at the wellbore or close to the wellbore.

Particularly in the cases of severe or total losses, the stiff fibers and methods of the invention can be used as a pre-treatment before a more consolidated treatment. This use as a pre-treatment decreases the total cost, decreases damage to the formation, decreases further problems that may otherwise appear because of delays in treatment, and increases the chances of an effective first placement of the secondary treatment (such as a cement plug or a reactive pill). Thus, the stiff fibers and methods of the invention can be used in a first (primary) treatment for a temporary cure of severe or total losses. For greater assurance of a permanent and complete treatment, it is convenient for a driller then to place a second treatment, such as a viscous pill or a cement plug. In that case the composition and method assure that the second treatment is effective.

A suitable blend of stiff fibers and solids is selected for a given fluid and given conditions, such as but not limited to the fluid type, the bottom hole temperature and the extent of losses being experienced. An effective concentration of each component, or a range of effective concentrations, can be identified by performing experiments such as those described below. Similarly, suitable compositions of solid particles and stiff fibers, and suitable particle size ranges and fiber size and stiffness can be identified by performing experiments such as those described below.

The present invention can be further understood from the following examples.

## Experimental

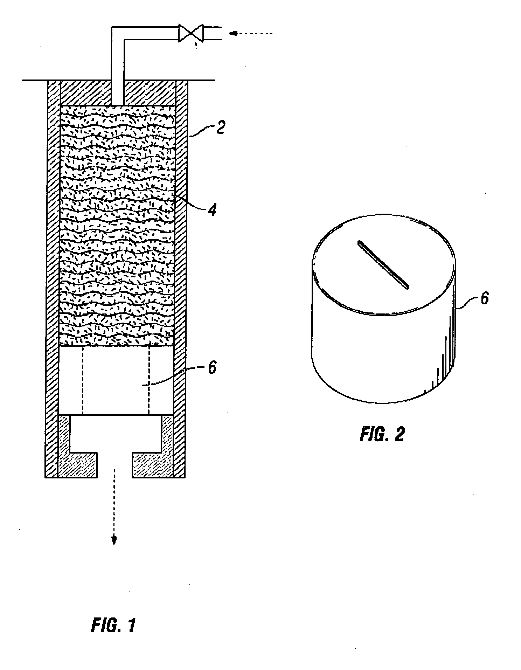

Experiments were performed primarily with four different bentonite water-based muds. The density was varied from 1.44 to 1.55 kg/L (12 to 12.9 ppg) and the solids content was varied from 18 weight per cent to 30 weight per cent. The water-based fluid formulations are shown in Tables 1 to 4. PV is the plastic viscosity and Ty is the dynamic shear stress for Bingham fluids. Different formulations were prepared to observe the effect of solids loading on the fiber performance. Calcium carbonate was used as a lost circulation material and barite as a weighting agent. All the tests were performed in a modified lost circulation cell, shown in Figure 1, equipped with modified slits through a grid or through a cylinder approximately 50 mm high having either a 1 mm to 3 mm slot or 1 mm to 3 mm holes, as shown in Figure 2 for a slot. The experimental set up consisted essentially of a high-pressure high-temperature fluid loss cell [2] that is equipped with the cylinder [6] at the bottom. Pressure was applied from the top of the cell onto fluid [4] placed in the cell (as in traditional fluid loss experiments). A valve at the bottom was closed and a grid or cylinder having a slot or holes was placed inside the cell. 300 mL of fiber-laden fluid was poured into the test cell, and the cell was closed and pressurized to 2.07 MPa (100 psi) to simulate this differential pressure at two ends of a fracture. Once the cell was pressurized, the bottom valve was opened quickly enough to eliminate filtration of fibers through the bottom pipe. If the grid was plugged, then the pressure was increased from 2.07 MPa (100 psi) to 3.45 MPa (500 psi) in steps of 0.345 MPa (50 psi). The increase in pressure was purposely introduced to verify the strength of the filter cake. The pressure was held for at least 30 minutes unless no plug formed or the plug failed. The loss of the mud was monitored by a balance that was connected to a computer. The filtrate container was placed on a weighing balance and the weighing balance was connected to a computer via cable to record fluid loss over time.

The bentonite used had a particle size ranging from about 10 to about 100 microns. The "fine" calcium carbonate, hereinafter sometimes designated as the "10 micron" material, was about 10 per cent smaller than about 1.1 microns, about 50 per cent smaller than about 8.6 microns, and about 90 per cent smaller than about 27 microns; the "medium" calcium carbonate, hereinafter sometimes designated as the "130 micron" material, was about 10 per cent smaller than about 15 microns, about 50 per cent smaller than about 138 microns, and about 90 per cent smaller than about 302 microns; and the "coarse" calcium carbonate, hereinafter sometimes designated as the "1000 micron" material, was about 10 per cent smaller than about 9.5 microns, about 50 per cent smaller than about 1026 microns, and about 90 per cent smaller than about 1500 microns.

### Table 1. Bentonite Water-Based Mud Formulation 1

|  | Component | Kg/m$^3$ | lb/bbl |
|---|---|---|---|
|  | Water | 815 | 285 |
| **Viscosifier** | Bentonite | 51 | 18 |
| **Weighting Agent** | Barite | 342 | 119 |
| **Lost Circulation Material 1** | CaCO3 -130um | 171 | 60 |
| **Lost Circulation Material 2** | CaCO3 -10um | 57 | 20 |
|  |  |  |  |
| **Density: lb/gal [SG]** | 12.00 [1.43] |  |  |
| **Solid Loading (wt %)** | 18 |  |  |
| **PV (cP)** | 22 |  |  |
| **Ty (lb/100ft$^2$)** | 18 |  |  |
| **10 sec Gel** | 22 |  |  |
| **10 min Gel** | 34 |  |  |
|  |  |  |  |
| **API Fluid Loss** | 12 mL after 30min |  |  |

### Table 2. Bentonite Water-Based Mud Formulation 2

|  | Component | Kg/m$^3$ | lb/bbl |
|---|---|---|---|
|  | Water | 747 | 261 |
| **Viscosifier** | Bentonite | 60 | 21 |
| **Weighting Agent** | Barite | 200 | 70 |
| **Lost Circulation Material 1** | CaCO3 -1000um | 130 | 45 |
| **Lost Circulation Material 2** | CaCO3 -130um | 383 | 134 |
|  |  |  |  |
| **Density: lb/gal [SG]** | 12.56 [1.50] |  |  |
| **Solid Loading (%)** | 25 |  |  |
| **PV (cP)** | 70 |  |  |
| **Ty (lb/100ft$^2$)** | 28 |  |  |
| **10 sec Gel** | 22 |  |  |
| **10 min Gel** | 45 |  |  |

(continued)

| | Component | Kg/m³ | lb/bbl |
|---|---|---|---|
| API Fluid Loss | 21 mL after 30 min | | |

**Table 3. Bentonite Water-Based Mud Formulation 3**

| | Component | Kg/m³ | lb/bbl |
|---|---|---|---|
| | Water | 747 | 261 |
| Viscosifier | Bentonite | 60 | 21 |
| Weighting Agent | Barite | 350 | 122 |
| Lost Circulation Material 1 | CaCO3 -1000um | 60 | 21 |
| Lost Circulation Material 2 | CaCO3 -130um | 336 | 117 |
| | | | |
| Density: lb/gal [SG] | 12.9 [1.54] | | |
| Solid Loading (%) | 25 | | |
| PV (cP) | 42 | | |
| Ty (lb/100ft²) | 32 | | |
| 10 sec Gel | 24 | | |
| 10 min Gel | 52 | | |
| | | | |
| API Fluid Loss | 21 mL after 30 min | | |

**Table 4. Bentonite Water-Based Mud Formulation 4**

| | Component | Kg/m³ | lb/bbl |
|---|---|---|---|
| | Water | 742 | 259 |
| Viscosifier | Bentonite | 60 | 21 |
| Weighting Agent | Barite | 198 | 69 |
| Lost Circulation Material 1 | CaCO3 -130um | 510 | 259 |
| | | | |
| Density: lb/gal [SG] | 12.56 [1.50] | | |
| Solid Loading (%) | 25 | | |
| PV (cP) | 36 | | |
| Ty (lb/100fr²) | 26 | | |
| 10 sec Gel | 24 | | |
| 10 min Gel | 48 | | |
| API Fluid Loss | 21.2 mL after 30 min | | |

Seven fibers were used for most of the performance comparisons. The seven fibers were two cross linked polyvinyl alcohols (hereinafter designated R1 and R2), either of two multifilament polypropylene fibers (hereinafter designated FM), three nylon fibers (hereinafter designated as NL), and glass fibers (hereinafter designated GL). R1 was a non-water-soluble polyvinyl alcohol in a flat shape, having a length of about 12 mm, a width of about 350 microns, and thickness of about 80 microns measured in our laboratory, a melting point above 200 °C, and a Young's modulus of 29 GPa (KURALON™ RF400 fiber available from Kuraray, Osaka, Japan). R2 was RECS100, also a non-water-soluble polyvinyl alcohol having a diameter of about 100 microns, a melting point above 200 °C, and a Young's modulus of 25 GPa (KURALON™ RECS100 fiber available from Kuraray, Osaka, Japan).. The two FM fibers were also non-water-soluble, had a melting point of 328 °F (164 °C), had diameters of about 45 microns and 12.5 microns and lengths of about 12 mm and 19 mm, respectively. Both were coated with less than 1 per cent each of a proprietary coating and a lubricant. The 45 micron FM material was FIBERMESH™ 150-12 (available from Propex Inc., Chattanooga TN, U. S. A.). The 12.5 micron FM material was SPECTER™ fiber available from PGI Performance Concrete Fibers, Kingman KS, U. S. A. The glass fiber was about 12 mm in length and about 20 microns in diameter, and was obtained in tows of around 100 fibers packed together from Owens Coming, Toledo, OH, U. S. A. under the trade name of CEMFIL™. The nylon fibers are available from DuPont, Wilmington, DE, U. S. A. or Rhodia Polyamide, Saint Fons, FR, under the trade names of TYNEX™ or PA66™. The fibers have different densities, so, to make the comparisons with equal volumes of fibers, the fiber concentrations were varied in such a way as to keep the fiber volumes constant during the comparisons. The weight concentrations required for equal volumes of some of the fibers are shown in Table 5.

**Table 5. Number of Fibers Based on Fiber Volume**

| Fiber | Single Fiber Vol (mL) | Fiber Cone. kg/m$^3$ (lb/bbl) | Total Fiber vol. Based on Fiber Conc. (mL) | Total Number of Fibers in 1.68 mL |
|---|---|---|---|---|
| GL | 3.77E-06 | 14.27 (5.00) | 1.68 | 445860 |
| FM | 2.36E-05 | 22.74 (1.79) | 1.68 | 71338 |
| R1 | 3.36E-04 | 7.47 (2.62) | 1.68 | 5000 |
| R2 | 9.42E-05 | 7.47 (2.62) | 1.68 | 17834 |

It was observed that in some cases, for example GL fibers with fluid formulations 2 and 3 (Tables 2 and 3) the fibers could plug slots at low pressure, for example 2.07 MPa (100 psi), but as soon as the pressure was increased, for example up to 2.41 MPa (350 psi) or 3.45 MPa (500 psi) the plug failed and the fluid inside the cell came out. If at any time the plug failed, the test was stopped and the results were recorded.

A few tests were performed applying 3.45 MPa (500 psi) pressure immediately, without starting from 0.69 MPa (100 psi). Those experiments were intended to evaluate the fiber's plugging behavior when suddenly exposed to higher pressures downhole, for example surge and swab pressures, or to a loss zone situation with an annular pressure of 3.45 MPa (500 psi) due to the hydrostatic column.

**Example 1. Comparison of GL, FM, and R1+R2 with 2 mm Holes**

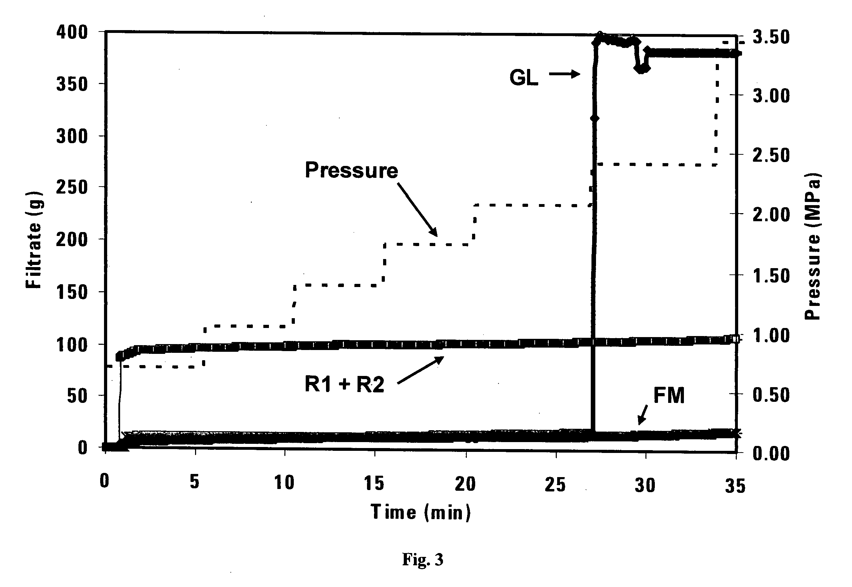

A series of tests was performed with GL without any mica. These tests were designed with 2 mm holes and a 2 mm slot to determine the effectiveness of fibers in the same fluid formulation. The fluid formulation was the fluid of Table 1, with no coarse (1000 microns) calcium carbonate. GL was compared to a mixture of R1 and R2 fibers. R1 and R2 were mixed at 50 volume per cent each (hereinafter designated as R1+R2). To compare equal volumes of fibers, the overall fiber volume was 1.68 mL in 300 mL of the base fluid for the fibers in each test in all the examples below, unless mica was present, so the amounts of Rland R2 were 0.84 mL each. When mica was added, the volume of fiber was 1.34 mL and the volume of mica used was 2.36 mL. For 2 mm holes, GL initially performed well, with less spurt and lower fluid loss up to 25 minutes compared to R1+R2 fibers (which showed almost 100 mL spurt but then good high pressure performance), but as soon as the pressure was stepped up to 2.41 MPa (350 psi), the GL plug failed and all the fluid came out in the filtrate. FM performed very well. The mixture of R1+R2, even though it had a higher spurt, withstood 3.45 MPa (500 psi) (see Figure 3).

**Example 2. Comparison of GL, FM, and R1+R2 with 2 mm Slot**

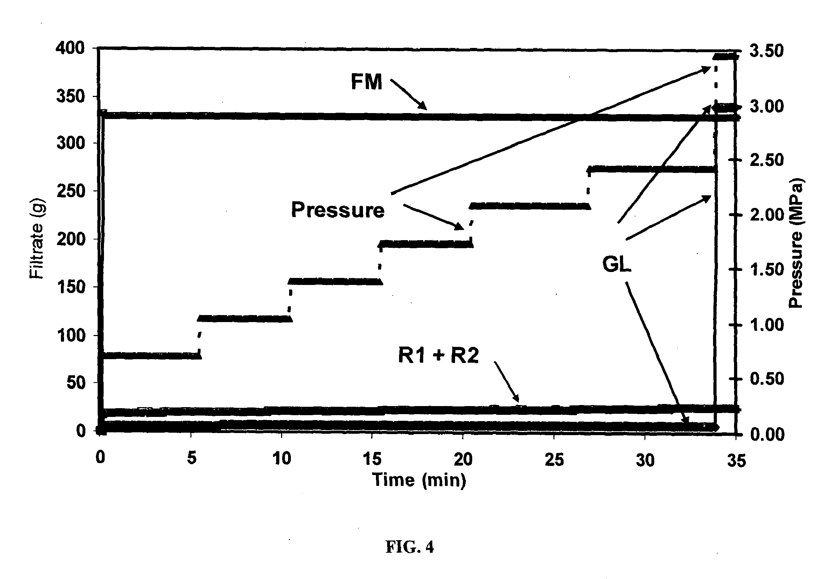

With the 2 mm slot and the same fluid and fibers as in Example 1, GL started with slightly lower spurt than a mixture of R1 and R2, and the filtrate stayed below 10 g until the pressure reached 3.45 MPa (500 psi). As soon as the pressure increased from 2.41 MPa (350 psi) to 3.45 MPa (500 psi), the GL plug failed and all the fluid came out. A mixture of 1.68 mL of R1 and R2 fibers started with 19 g spurt and showed only 26 g fluid loss after 30 minutes (see Figure 4). FM was also compared in the same formulation and a 2 mm slot and the result was an instant failure at 0.69 MPa (100 psi).

In Figures 3 and 4, the total flow area for the 2 mm holes compared to the 2 mm slot was 3:1. The spurt for R1+R2 and for the GL fibers was also approximately 3:1 for the 2 mm holes and the 2 mm slot. FM is a highly flexible fiber, not a stiff fiber; it performed very well in the 2 mm holes, but failed to build a fiber mesh in the 2 mm slot.

**Example 3. Comparison of GL+Mica, and FM+Mica, with 2 mm Slot**

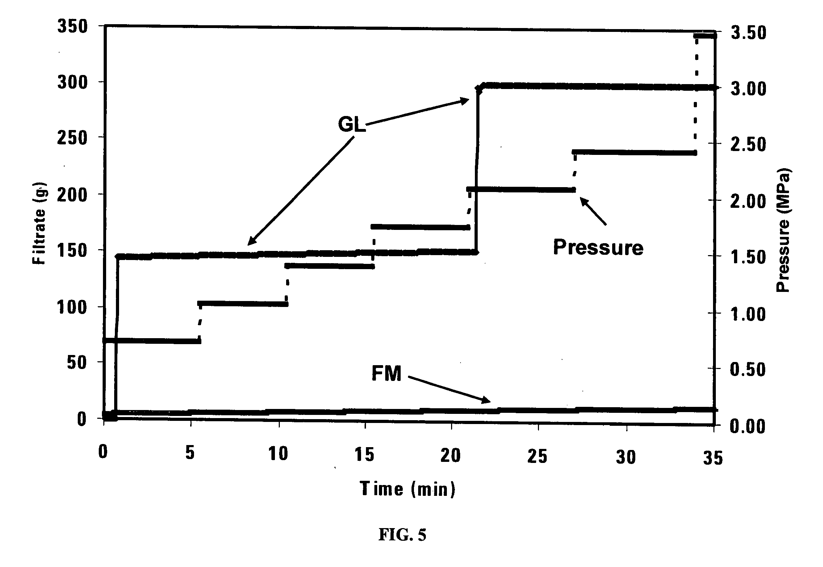

A performance comparison was made between a mixture of 20 weight per cent GL and 80 weight per cent coarse mica (hereinafter designated GL+mica; containing 1.34 mL GL and 2.36 mL mica), and 20 weight per cent multifilament polypropylene fibers (FM) with 80 weight per cent coarse mica (hereinafter designated FM+mica; containing 1.34 mL FM and 2.36 mL mica) with a 2 mm slot. The fluid formulation used was the 1.50 kg/L (12.56 lb/gal (ppg)), 1.5 SG, 25 per cent SVF, water-based mud with no coarse (1000 microns) calcium carbonate, described in Table 4. Both the fiber systems could plug the 2 mm slot, but it can be seen that the GL+mica system's plug allowed a very high spurt and then could not resist high pressure and lost its strength when the pressure changed from 1.72 MPa (250 psi) to 2.07 MPa (300 psi) (see Figure 5).

**Example 4: Plug Comparison of GL, FM, and R1+R2 with 3 mm Slot**

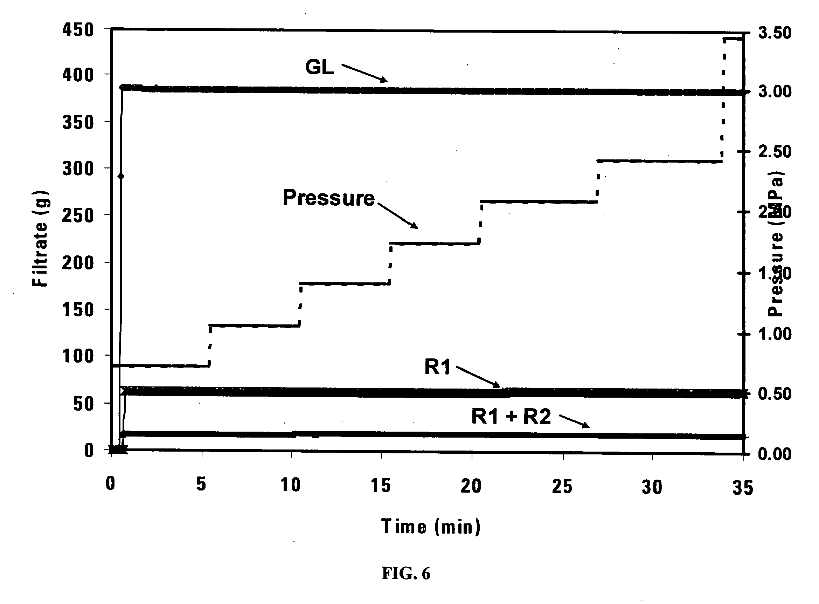

These fibers were tested with fluid formulation 4 (Table 4) and a 3 mm slot. The comparison was made between GL, FM, R1+R2, and R1 alone. GL or FM could not plug the slot at 0.69 MPa (100 psi) pressure drop, but R1+R2 plugged the 3 mm slot with a spurt of 15 g and a total fluid loss of 17 g after 35 min. R1 could plug the 3 mm slot alone (see Figure 6). Not shown, is that R1 and R2 also could each plug the 2 mm slot when used alone in the fluid formulation of Table 4. The plug failures of GL at intermediate pressures are consistent with the theory of fiber stiffness explained elsewhere in this document. The stress on the fiber at the higher pressures exceeded the fiber's capacity and the fiber could not sustain the higher pressures. An additional reason behind the GL failure may be the fiber's inability to build a fiber mesh over the fracture width. A failure in any part of the process of building a mesh, plugging the mesh with particles, and sustaining the plug, results in a failure.

**Example 5. Calculation of Stiffness and Deflection**

A simplified approach for an equation for structural beam bending with support on both sides (as shown below) was utilized to estimate the deflection of a fiber with respect to an applied load.

Several assumptions were used to obtain an estimate of the fiber deflection when exposed to a load. This was a simplified theoretical approach for estimating the strength of a fiber. The assumptions were as follows:

- Calculations were based on ambient conditions in air.
- The load was the pressure drop acting directly towards the fiber.
- The load was uniform over the fiber length.
- There was no fiber overlapping.

The load was calculated from the applied pressure (for example 70 gram-force/square millimeters (100 psi)) and the fiber surface area exposed to that pressure.

Fiber Deflection

$$y = \frac{5}{384} \frac{W \ell^3}{EI} - - - - - - - - - - (1)$$

Inertia cylinder

$$\frac{\pi\, r^{\,4}}{4} \;-\;-\;-\;-\;-\;-\;-\;-\;-\;-\;-\;-\;(\,2\,)$$

Inertia rectangle

$$\frac{t b^{\,3}}{12} \;-\;-\;-\;-\;-\;-\;-\;-\;-\;-\;-\;-\;-\;(\,3\,)$$

W = Weight or force causing the deflection (grams)
E = Modulus of Elasticity (Kg/mm2)
I = Moment of Inertia (mm$^4$)
$\ell$ = Fracture width (mm)
y = Deflection (mm)
r = Fiber radius (micron)
$t$ = Fiber thickness (mm)
b = Fiber width/breadth (mm)

These equations may be applied to fibers of regular or irregular cross-sectional shape; as an example the calculation for fibers having circular cross sections is given below.

The deflection is proportional to 1/ stiffness and the W and L in eq. (1) were kept constant for all the fibers and the stiffness was thus calculated. Table 6 gives the "stiffness factor" defined as the ratio of the stiffness of a given fiber to the stiffness of the glass fibers used in these experiments. The calculation of the stiffness or stiffness factor for the rectangular fiber was the same as for the circular fibers, except that the inertia rectangle (eq.3) was used.

**Table 6. Stiffness Estimation**

| Fiber | Material | Diameter/thickness | E | Stiffness factor |
|---|---|---|---|---|
| | | (um) | (Kg/mm2) | |
| 1. GL - 20 microns | Alkaline resisted glass | 20 | 6628.16 | 1.000 |
| 2. FM - 45microns | Polypropylene | 45 | 152.96 | 0.591 |
| 3. NL - 150microns | Nylon | 150 | 203.94 | 97.356 |
| 4. NL - 250microns | Nylon | 250 | 203.94 | 751.202 |
| 5. NL - 280microns | Nylon | 280 | 203.94 | 1182.031 |
| 6. FM - 12.5microns | Polypropylene | 12.5 | 152.96 | 0.004 |
| 7. NL - 50microns | Nylon | 50 | 203.94 | 1.202 |
| 8. R1 | Crosslinked Polyvinyl alcohol | 80 | 2957.18 | 1014.818 |
| 9. R2 | Crosslinked Polyvinyl alcohol | 100 | 2549.29 | 240.385 |

This shows that fibers having stiffnesses of from about 20 to about 1200 times the stiffness of a glass fiber having a modulus of 65 GPa, a diameter of 20 microns, and a length of 12 mm are suitable stiff fibers of the invention. It is believed that stiffnesses of from about 2 to about 400,000 are suitable, preferably between 4 to 12,000; and most preferably between 80 to 2,500 times stiffer The stiffness comparison is not limited to circular and rectangular fibers, but can be extended to fibers with other types of cross section.

**Example 6. Plug Comparison GL, FM, and R1+R2 with Change in Pressure Drop**

The strength of the filter cake with progressive pressure increments was studied and it was found out that the mode of increase in the pressure difference could give different results. A series of tests was designed to observe the fiber plug performance at 3.45 MPa (500 psi) pressure drop. These tests started at 3.45 MPa (500 psi) with no stepping up of the pressure and the fluid loss was recorded for 35 min. The fiber plug performance with incremental increases from 0.69 MPa (100 psi) to 3.45 MPa (500 psi) was compared to fiber plug performance at 3.45 MPa (500 psi). It was found that this difference had a large effect on fiber plug performance. Plug performances of 1.68 mL of GL, FM, or R1+R2 were compared with the two different pressure profiles in a 2 mm slot. The fluid formulation was the 25 per cent SVF water-based mud with 130 kg/m$^3$ (45 lb/bbl) coarse calcium carbonate shown in Table 2.

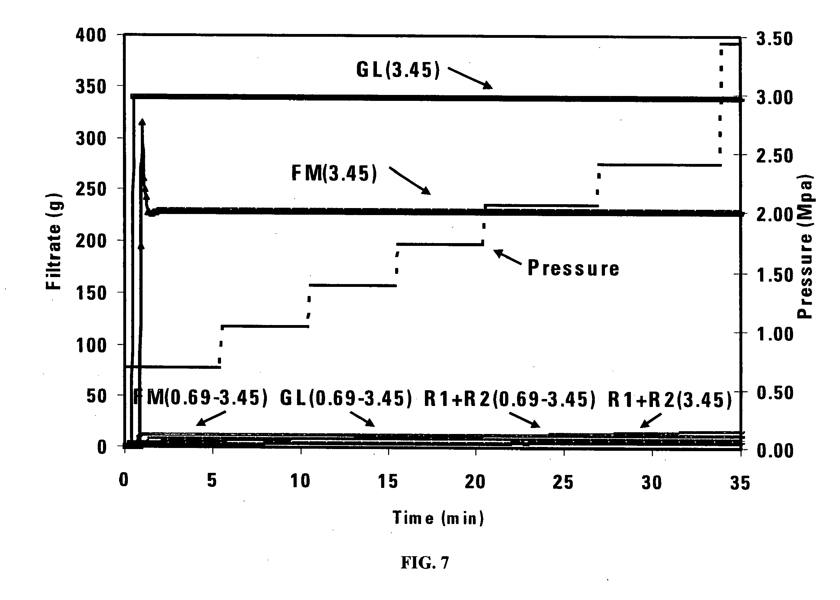

GL plugged the 2 mm slot, and, as opposed to the previous experiments, the plug did not fail at a transition from 2.07 MPa (300 psi) onwards to 3.45 MPa (500 psi); the spurt recorded was 4 g and fluid loss was 17 g after 35 min. This demonstrates the superior performance when the coarse solid particles are present. When a second test was performed with the same fluid formulation but an immediate pressure drop of 3.45 MPa (500 psi), GL failed instantly (see Figure 7). (In Figure 7, (0.69-3.45) after the code for a fiber means that the pressure was increased in increments from 0.69 MPa (100 psi) to 3.45 MPa (500 psi); (3.45) after the code for a fiber means that the pressure was increased to 3.45 MPa (500 psi) immediately.) Similar behavior was observed with 1.68 mL of FM; it could plug a 2 mm slot from 0.69 MPa (100 psi) to 3.45 MPa (500 psi) with a spurt of 2 g and a fluid loss of 7 g after 35 min; with an immediate pressure drop of 3.45 MPa (500 psi), FM failed instantly (see Figure 7). A combination of R1 and R2 (0.84 mL each) could plug a 2 mm slot at from 0.69 MPa (100 psi) to 3.45 MPa (500 psi) and with an immediate 3.45 MPa (500 psi) pressure drop. The spurt observed with R1+R2 as the pressure was increased from 0.69 MPa (100 psi) to 3.45 MPa (500 psi) was 10 g and the fluid loss was 12 g after 35 min. The spurt with R1+R2 with an immediate pressure drop of 3.45 MPa (500 psi) was 5 g and the fluid loss was 8 g after 35 min (see Figure 7).

**Example 7. Plug Comparison of GL, FM, and R1+R2 with 3-2-1 mm Slot with Immediate 3.45 MPa (500 psi)**

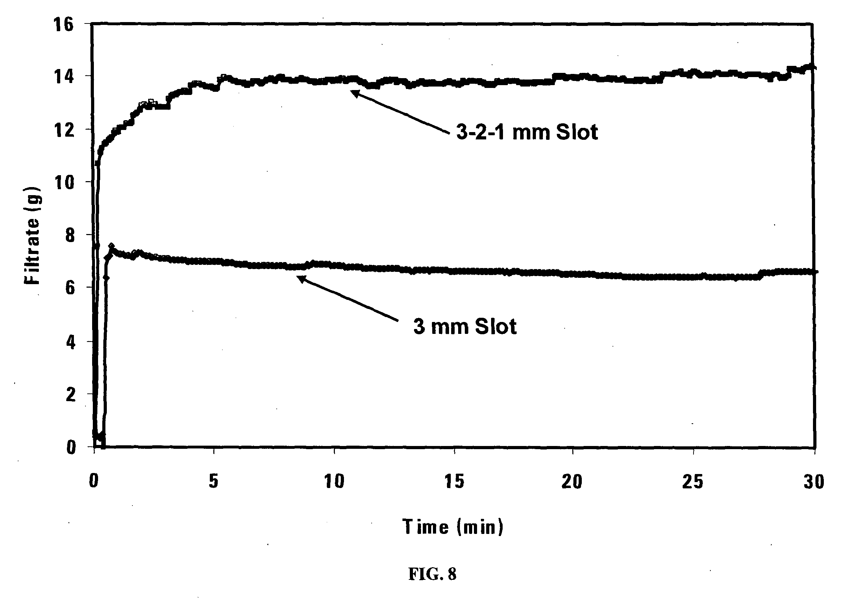

One test was carried out with 2.68 mL of R1+R2 fiber with the 1.44 kg/L (12 lb/gal), 25 per cent SVF water-based fluid of Table 2 and a grid having three different fracture widths of 3, 2, and 1 mm. This experiment was designed to show the performance of fibers when exposed to the real situation of multiple fracture widths. 1.68 mL of GL, FM, or R1+R2 could not plug the 3-2-1 mm slot. The test was repeated with 2.68 mL of GL, FM, or R1+R2; only the R1+R2 could plug that grid. The experiments were repeated to check the reproducibility and the results were reproducible. Figure 8 shows a comparison of results with 2.68 mL of R1+ R2 fibers with the 3 mm slot and the 3-2-1 mm slot with an immediate 3.45 MPa (500 psi) pressure drop.

**Example 8. Fiber Effectiveness at Lower SVF**

It has been found that a certain solids content was required to achieve plugging and that, to plug greater fracture widths, the solids content had to be increased. After observing the plugging behavior of R1+R2 fibers in 25 per cent SVF fluids, the combination was tested with the 1.44 kg/L (12 lb/gal), 18 per cent SVF, water-based mud formulation shown in Table 1 with 2 mm slot or holes and 3 mm slot grids. GL or FM could not plug 2 mm holes or the 2 mm slot with the 18 per cent SVF fluid, even when combined with 22.8 kg/m$^3$ (8.0 lb/bbl) of coarse mica. It was seen, however, that a combination of R1+R2 fiber equivalent to 13.0 kg/m$^3$ (5.0 lb/bbl) GL could plug both the 2 mm hole and the 2 mm slot.

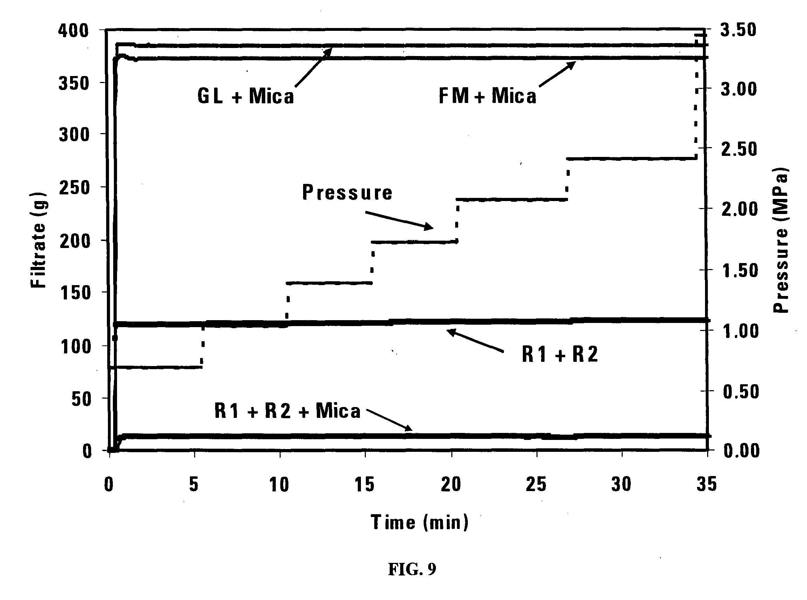

A similar comparison with the lower solids content fluid was performed with the 2 mm slot with 1.34 mL GL and 2.36 mL coarse mica, or 1.34 mL FM with 2.36 mL coarse mica, or 1.34 mL R1+R2 with 2.36 mL coarse mica. R1+R2+mica plugged the 2 mm slot with a spurt of 12.5 g and a fluid loss of 13 g after 35 min. The combination of R1 and R2 was also tested without any addition of coarse mica and that formulation also plugged the 2 mm slot with a spurt of 119 g and a fluid loss of 122 g after 35 min (see Figure 9). Adding coarse mica improved the performance of the R1+R2 combination, but R1+R2 alone could plug the 2 mm slot and coarse mica was not required. In an extension of these tests, neither R1+R2+mica nor R1+R2 alone could plug the 3 mm slot; they failed instantly at 0.69 MPa (100 psi) with this 18 per cent SVF fluid.

For the distribution of particle sizes of the fluid of Table 1, the optimal PVF is about 0.87. A fluid prepared with 0.87 PVF and 1.68 mL of stiff R1 fibers cannot plug a 3 mm slotA system having stiff fibers and the optimal PVF of a fluid system does not plug and fail instantly at 0.689 MPa (100 psi) but the stiff fibers performed exceptionally well with the same particle size distribution but a less than optimum PVF. The stiff R1 fibers (1.68mL) plugged 3mm slot with the following fluid formulation of PVF 0.84 (Optimum PVF is 0.87). The density of this fluid was 12.5 lbm/gal and the SVF was 25%.

**Table 7: R1 fluid formulation**

| Ingredient | Kg/m$^3$ (lbm/bbl) |
|---|---|
| Water | 742 (259) |
| Bentonite (D020) | 60(21) |
| Barite (D031) | 198 (69) |
| CaCO3 - 130$\mu$m | 510 (178) |
| Density | |

The choice of fibers cam have a greater impact. This was clearly the case in this example with the 2 mm slot; the glass or polypropylene fibers failed, but the stiff fibers of the invention worked well. A fluid having a low solids content and no large (coarse) particles can plug fracture widths up to 2 mm with R1+R2 fibers, and increases in fiber concentration or modifications of fluid formulations can extend the performance window.

**Example 9. Further Studies of Fiber Stiffness**

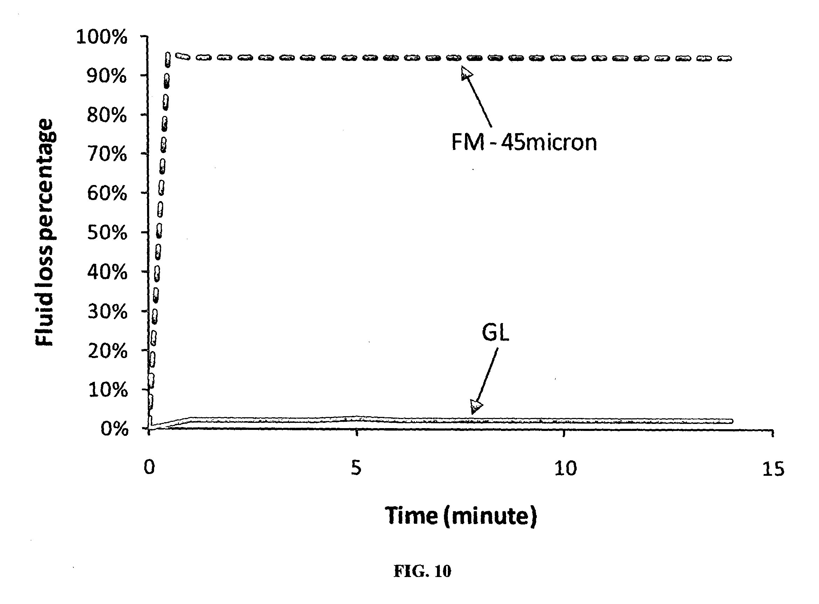

The stiffness of the fiber is the key criterion governing the efficiency of bridging the loss zone. Fibers having greater stiffness (fibers that are more stiff) are more efficient in bridging wider fractures. The following comparison was made with equal volumes of FM-45microns and GL fibers (1.68 mL in 300 mL of the fluid of Table 1) with a 2 mm slot at ambient temperature and 2.07 MPa (100 psi) differential pressure. The more flexible FM (polypropylene) fibers failed to provide fluid loss control; all the fluid was lost during the test. In contrast, the relatively stiffer GL (glass) fibers (~70 percent stiffer), under the same testing condition, provided fluid loss control in the 2 mm slot. The results are shown in Figure 10.

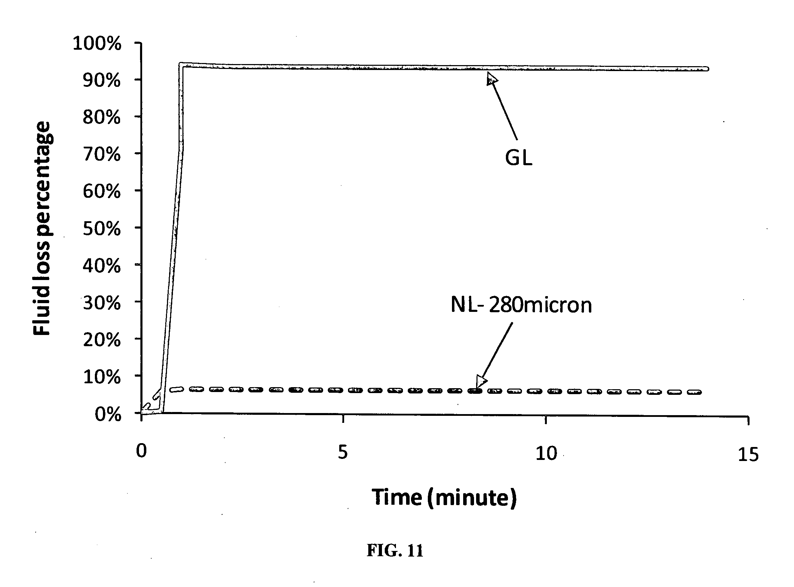

For the 3 mm slot, using 1.84 mL fiber in 400 mL of the fluid of Table 2, the glass fibers are not stiff enough to provide fluid loss control. All of the fluid and fibers exited the 3 mm slot and no fluid loss control was observed. On the other hand, much stiffer nylon fibers, for example, the TYNEX™ fibers from DuPont having a diameter of 280 microns and a length of 16 mm, when tested under the same conditions and with the same fiber volume, showed excellent fluid loss control and plugged the 3 mm slot readily after losing less than 10 percent of the test fluid. This stiff nylon fiber has a stiffness more than 1,000 times that of the glass fibers. The results are shown in Figure 11.

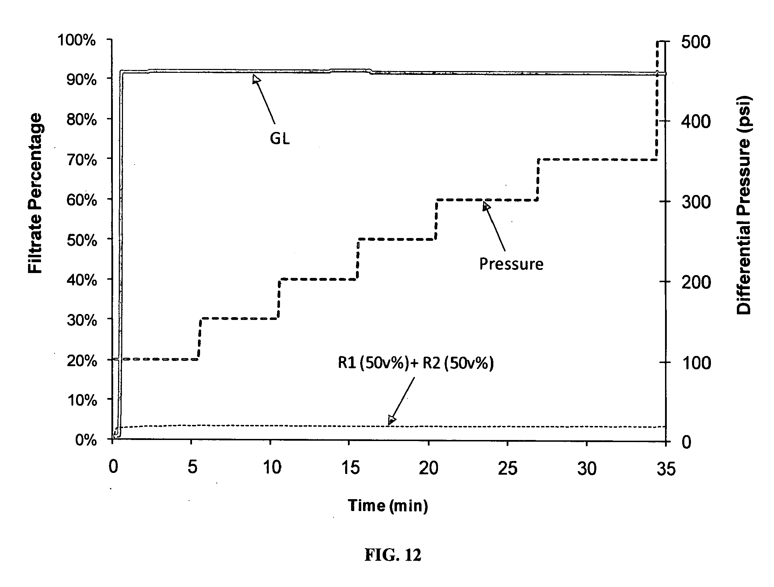

The utilization of stiff fibers not only allows superior fluid loss control for larger fracture widths, but at the same time improves the efficiency of controlling fluid loss over a wider range of fracture widths. For example, the stiff fibers (2.68 mL in 400 mL of the fluid of Table 2) can plug a grid having 1 mm, 2 mm and 3 mm slots simultaneously, whereas the flexible fibers cannot. This feature greatly minimizes the risk of not knowing the downhole fracture widths and their distribution. Figure 12 shows that GL fiber, lacking sufficient stiffness, did not plug all three sizes of slots at the same time. However, the blend of R1+R2 fibers, both stiffer than glass fibers, exhibited good fluid loss control from 2.07 MPa (100 psi) differential pressure progressively to 3.45 MPa (500 psi). The R1 fiber and R2 fibers are approximately 1000 times and 240 times stiffer than the GL fibers, respectively.

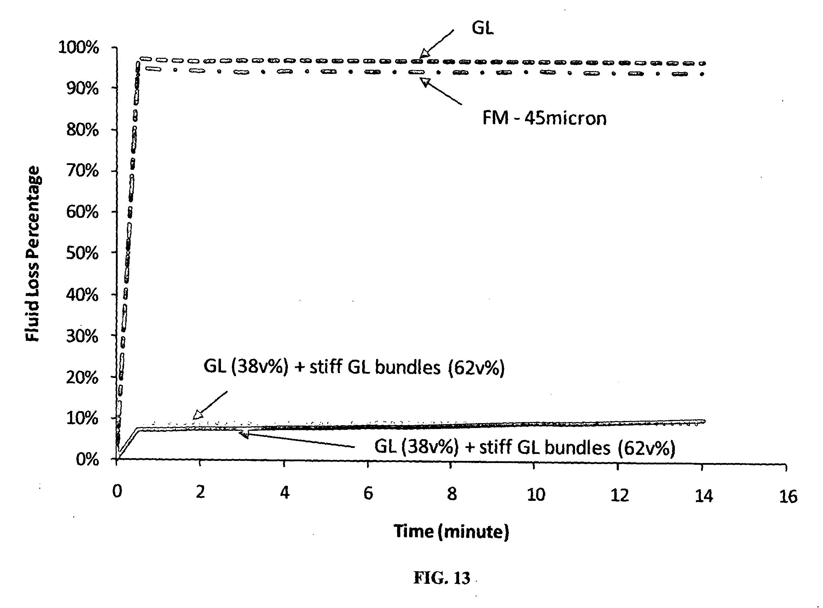

The same efficiency improvement obtained by utilizing stiff fibers was also observed when oil-based fluids were used as the base fluid. The results are shown in Figure 13. The fluid was a 1.44 kg/L (12 ppg) 80/20 OBM comprising 492 kg/m$^3$ EXXSOL™ D100 hydrocarbon fluid from ExxonMobil, Irving, TX, U. S. A., 13 kg/m$^3$ VERSAMUL™ multipurpose emulsifier from M-I SWACO, Houston, TX, U. S. A., 13 kg/m$^3$ VERSACOAT™ organic surfactant from M-I SWACO, 9 kg/m$^3$ VG SUPREME™ organophilic hectorite from Baroid Industrial Products, Houston, TX, U. S. A., 14 kg/m$^3$ ECO-TROL™ filtration control additive from M-I SWACO, 23 kg/m$^3$ Ca(OH)$_2$, 45 kg/m$^3$ CaCl$_2$, and was weighted with 667 kg/m$^3$ of barite. This OBM also contained 280 ppb of CaCO$_3$ particles. The size distribution of the CaCO$_3$ particles was 74:13:13 of particles having a D50 of 500 microns: 50 microns: 10 microns respectively. The fiber volumes were kept constant at 4 mL in 350.5 mL of the final fluid. Both the flexible polypropylene, FM, and GL, glass fibers, failed to control the fluid loss. The addition of stiff fibers resulted in significantly improved plugging efficiency indicating by the low percentage of fluid loss. In this case, the stiff fiber was a bundle of un-dispersed glass fibers (for example, CEMFIL™ 62/3 from OCV). There are approximately two to three hundreds glass fibers in each bundle; therefore, the bundle behaves like a stiff fiber.

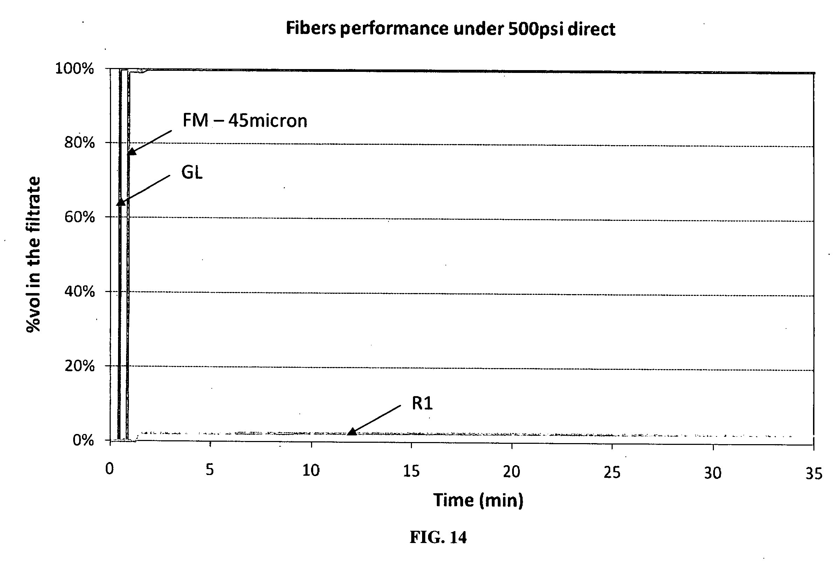

An important feature of stiff fibers is that they still exhibit the ability to control fluid loss when the differential pressure is immediately high (as opposed to increasing the pressure gradually). In Figure 14, a comparison is shown for three different fibers, i.e. the flexible polypropylene fiber FM (having a diameter of about 45 microns), the brittle glass fiber GL (having a diameter of about 20 micron) and the stiff R1 fiber. The fluid was the fluid of Table 3 and the fiber concentrations were 1.68 mL in 300 mL. All three formulations provided good fluid loss control for the 2 mm slot at 2.07 MPa (100 psi) of differential pressure. However, at 3.45 MPa (500 psi) pressure, the polypropylene fiber exited the 2 mm slot as soon as the pressure was applied. The same result was observed for the glass fiber; in addition, the glass fibers were ruptured into smaller fragments in the experiment. For the stiff R1 fiber, the ability to control fluid loss was retained.

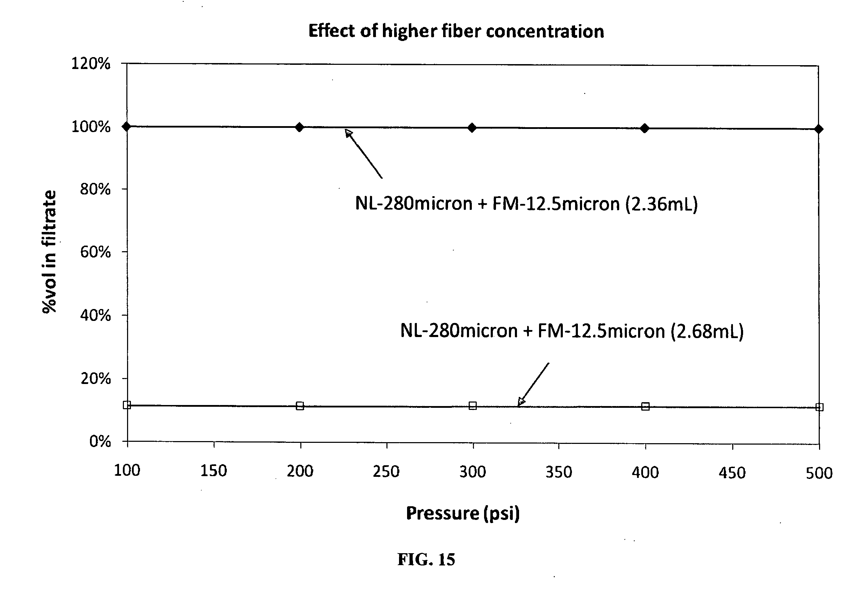

For a given type of fiber or fiber blend, increasing the fiber concentration improves the efficiency of fluid loss control. For example, for a 3 mm slot test with the fluid of Table 4, a fiber blend of stiff nylon fiber (TYNEX™) and flexible polypropylene fiber (SPECTER™ FM-12.5 microns), at a weight ratio of 90 to 10, the efficiency at controlling fluid loss was improved when the total fiber concentration was raised from 2.35 mL (in 300mL of final fluid) to 2.68 mL (as shown in Figure 15).

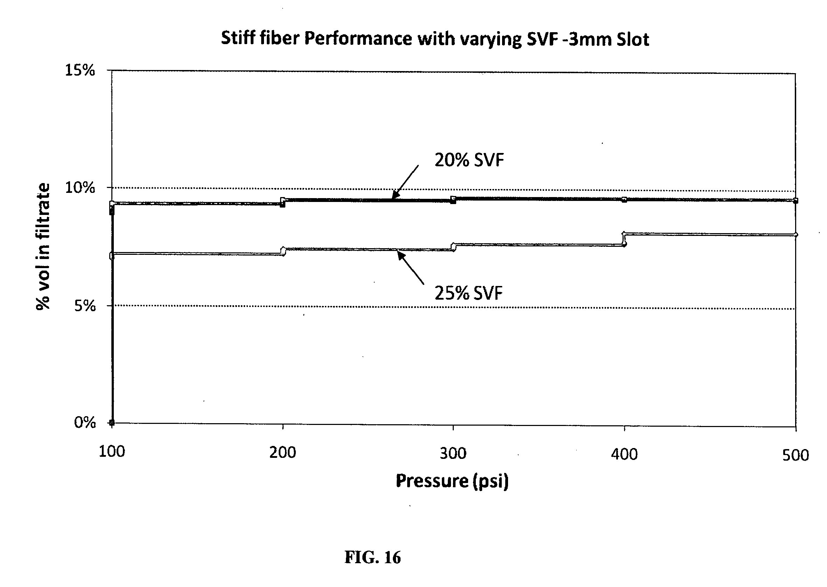

In addition to increasing the fiber concentration to achieve better fluid loss control, the Solid Volume Fraction (SVF) of the fluid can also be increased, i.e. adding more sized solids, to improve the fluid control efficiency. In Figure 16, a comparison is made between two systems having blends of stiff and flexible fibers (90 weight percent stiff nylon fibers and 10 weight percent flexible propylene FM fibers), one with 20 percent SVF and the other with 25 percent SVF. The higher SVF fluid consistently exhibited better efficiency between 2.07 MPa (100 psi) and 3.45 MPa (500 psi) of differential pressure. The tests were conducted with a 3 mm slot; the overall fiber concentration was 2.89 mL in 300mL of final fluid. The base fluid in each case was the fluid shown in Table 4.

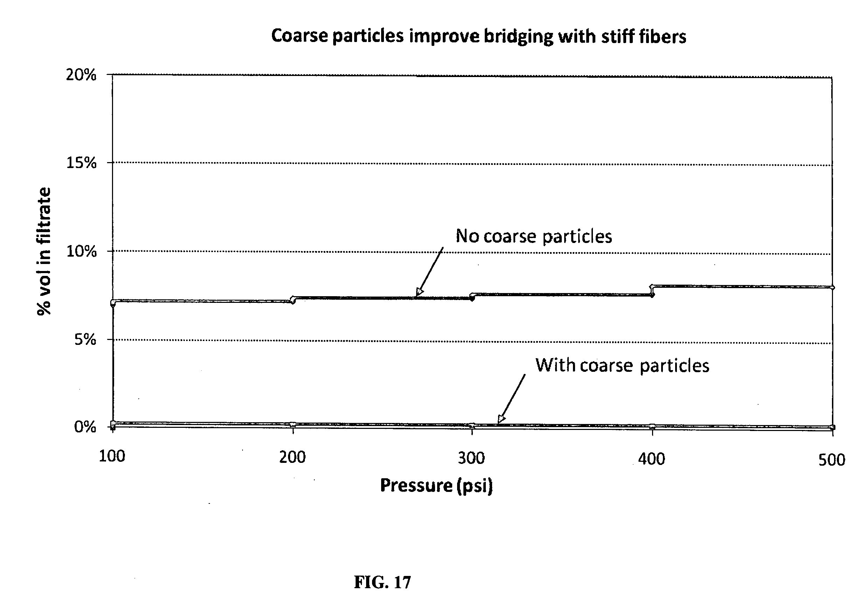

Alternatively, increasing the particle size of the added solids can also improve the overall efficiency of fluid loss control. Note that it would be necessary to ensure that the overall particle size distribution of the added particles was still in the suitable working range, otherwise simply increasing the particle size would not result in increased efficiency. For example, as shown in Figure 17, taking the same 20 percent SVF system presented in Figure 16, and including coarse particles while keeping the SVF constant (i.e. replacing 25 percent of the 130 micron $CaCO_3$ of the fluid in Table 4 with the 1000 micron $CaCO_3$), the addition of the larger particles increased the fluid loss control efficiency, again, consistently, from 2.07 MPa (100 psi) to 3.45 MPa (500 psi) of differential pressure.

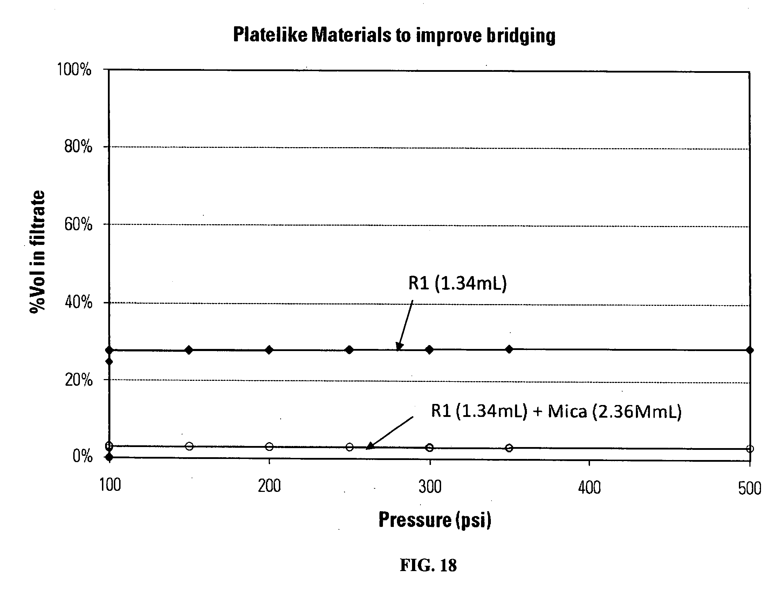

Alternatively, plate-like material can also be used to control the fluid loss better. For example, Figure 18 shows the effect of the addition of mica flakes (2.36 mL in 300 ml of fluid) in further improving the efficiency of stiff R1 fibers (1.34 mL in 300 ml of fluid). These tests were conducted in a 2 mm slot with the base fluid shown in Table 1. The same synergistic effect has also been observed with flexible fibers and with a blend of stiff and flexible fibers.

## Example 10. Plugging Comparison Based on Fiber Structural Parameters and Lost Circulation Material Particle Size Distribution

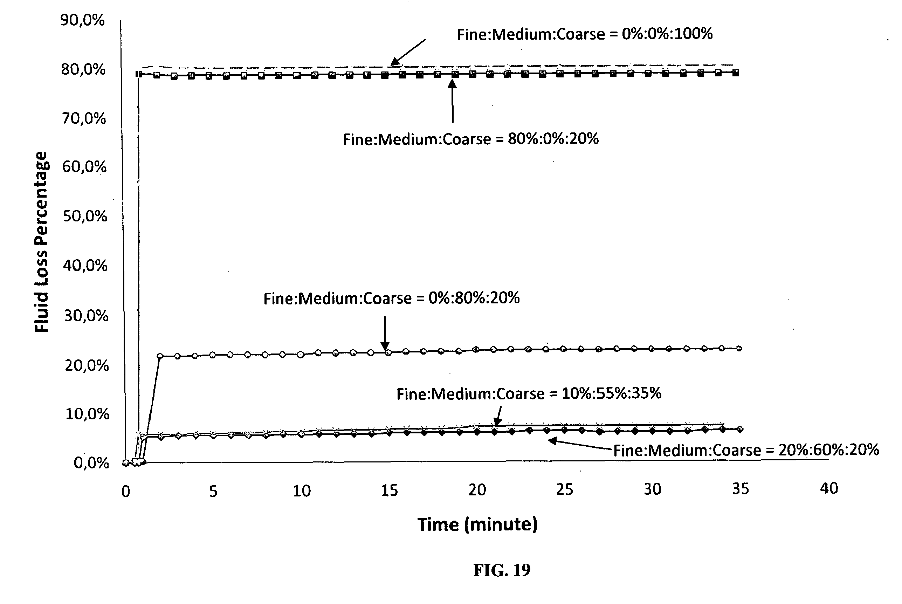

For a given fiber or fiber blend, the Particle Size Distribution (PSD) of the added particles governs the permeability of the plugged bridging fiber network. The selection of the proper PSD of the added particles is based on the pore size distribution of the fiber network, and therefore depends on structural parameters of the fibers. The utilization of stiff fibers facilitates bridging of the open fractures by the fibers; however, if the PSD of the added solids is not engineered properly, then the bridged fiber network will be too porous and thus fluid loss cannot be controlled. For example, the following five tests were performed under identical test conditions (a 3 mm slot at 2.07 MPa (100 psi)) and with the same fluid formulation; the only variable was the PSD of the added solids. The PSD is denoted by the ratio of Fine:Medium:Coarse. The D50 of the Fine particles was 10 microns; the D50 of the Medium particles was 180 microns; the D50 of the Coarse particles was 830 microns. All fluids were water based, with 25 percent of solid volume fraction, and the fiber concentrations were 0.84 mL of stiff R1 fiber and 0.84 mL of less stiff R2 fiber in 400 mL of the final fluid. The results indicated that too much of the Coarse or the Fine particles led to insufficient fluid loss control (as shown in Figure 19). Properly engineered ratios of the three categories of particles typically provided much improved efficiency. For example, the blends of 20 percent:60 percent:20 percent and the blend of 10 percent:55 percent:35 percent (Fine:Medium:Coarse) exhibited excellent fluid loss control. In case more fluid loss is required, for example to build a thicker filter cake, then the PSD can be tuned to increase the fluid loss and at the same time still achieve adequate fluid loss control, as shown by test 5 in Figure 19.

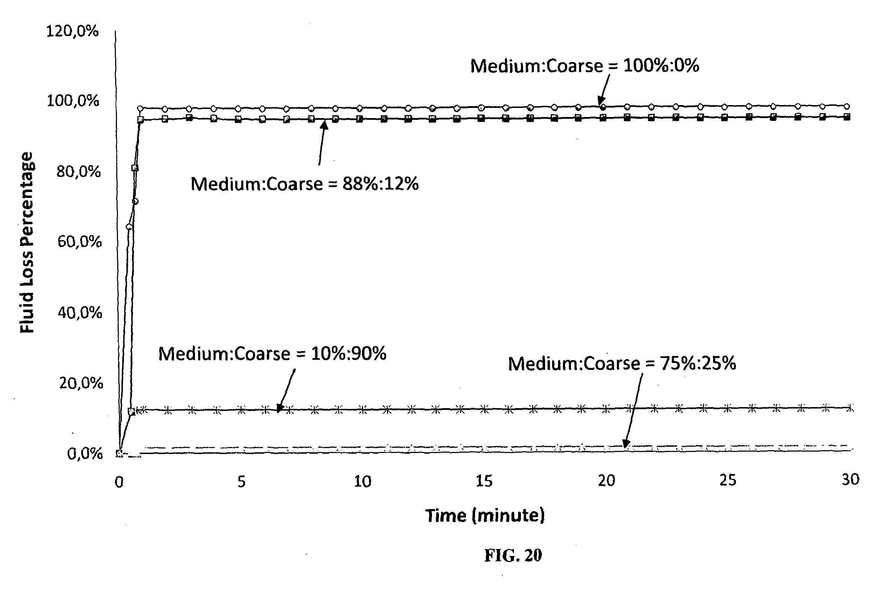

The same trend of optimizing fluid loss control via the PSD was also observed for an oil-based fluid (as shown in Figure 20). Just as in water-based fluids, to achieve the best efficiency of fluid loss control, it is necessary to engineer and optimize the PSD of the added particles. These tests were carried in a 3 mm slot at 3.45 MPa (500 psi). The base fluid was a 1.44 kg/L (12 ppg) 80/20 OBM comprising 492 kg/m³ EXXSOL™ D100 hydrocarbon fluid from ExxonMobil, Irving, TX, U. S. A., 13 kg/m³ VERSAMUL™ multipurpose emulsifier from M-I SWACO, Houston, TX, U. S. A., 13 kg/m³ VERSACOAT™ organic surfactant from M-I SWACO, 9 kg/m³ VG SUPREME™ organophilic hectorite from Baroid Industrial Products, Houston, TX, U. S. A., 14 kg/m³ ECOTROL™ filtration control additive from M-I SWACO, 23 kg/m³ $Ca(OH)_2$, 45 kg/m³ $CaCl_2$, and was weighted with 812 kg/m³ of barite. The fiber blend was 63 weight percent of stiff nylon 280 micron fiber (TYNEX™) and 37 weight percent of flexible nylon 50 micron fiber (PA66™ from Rhodia).

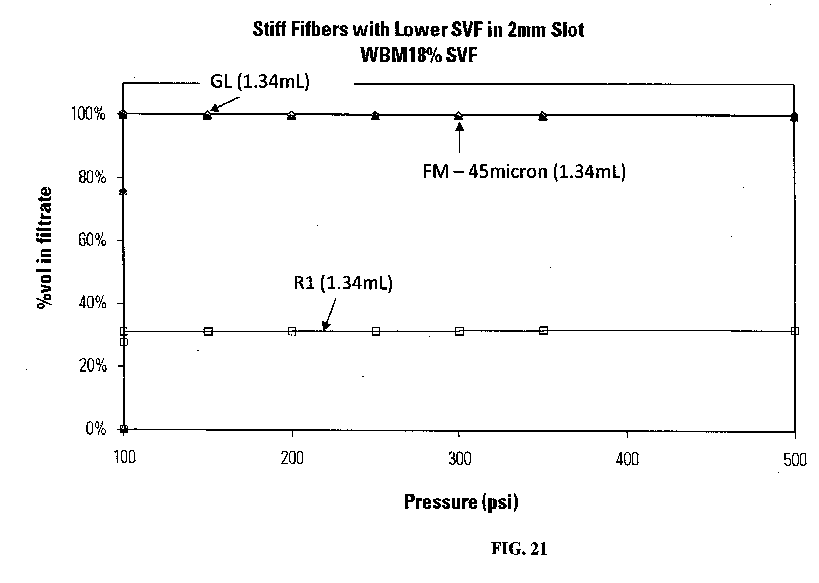

Even if the PSD of the particles is properly engineered, then an adequate concentration of particles in the fluid is still needed in order to achieve fluid loss control. For example, as shown in Figure 21, a comparison was made between three fiber systems (1.34 mL glass (GL), polypropylene (FM), and stiff R1 fiber in 300 mL fluid) with relatively low concentrations of solids (18 percent SVF) but with PSD optimized. These tests were carried out with the base fluid in Table 1, at 2.07 MPa (100 psi) in a 2 mm slot. The PSD was 20 percent Fine/60 percent Medium/20 percent Coarse for the GL fiber and FM-45 micron fiber; and 10 percent Fine/90 percent Medium for the test with R1 fiber only. Only the stiff fibers showed good fluid loss control, and the more flexible polypropylene and glass fibers failed to provide any control at all. Reducing the criticality of the solids content is another beneficial feature of using stiff fibers.

As previously mentioned, the optimal PSD range depends on the structure of the fibers and, to some degree, on the nature of the raw materials. For example, the thinner and more flexible fibers like glass fibers and polypropylene fibers tend to favor a combination of fine, medium and coarse particles, with the content of medium particles being the highest (see Table 7). For the thicker and stiffer fibers like nylon and R1 fibers, it is not necessary to have the coarse particles. In other words, when thinner and more flexible fibers are used, addition of coarser particles is needed to control the fluid loss.

**Table 8: Optimal PSD range comparison**

| Fiber | Fine | Medium | Coarse |
|---|---|---|---|
| Glass fiber | 10-20 vol% | 60-80 vol% | 10-20 vol% |
| Stiff Nylon fiber (280 microns in diameter) | 10-20 vol% | 40-90 vol% | 0 % |
| Flexible Polypropylene fiber (13 microns in diameter) | 10-20 vol% | 60-80 vol% | 10-20 vol% |
| R1 fiber | 10-20 vol% | 40-90 vol% | 0 % |

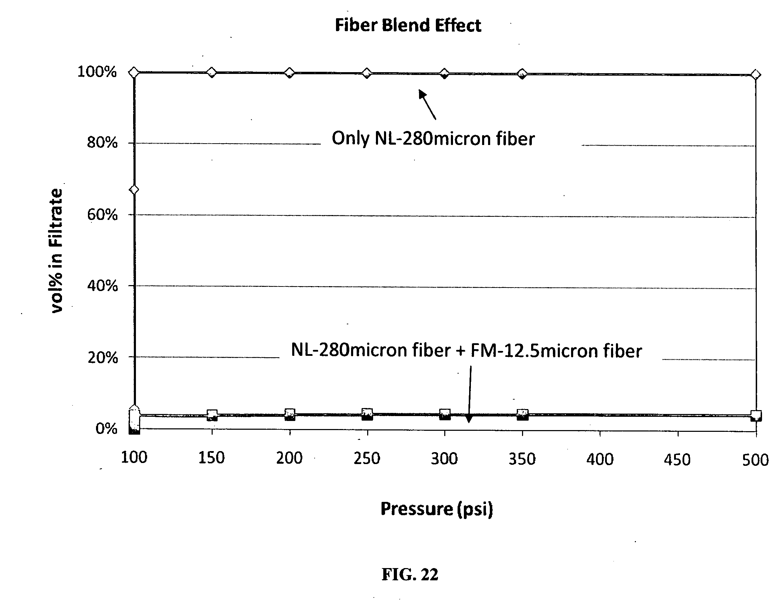

It was also found that substituting flexible fibers for some of the stiff fibers can also further improve the efficiency. For example, as shown in Figure 22, comparing two systems with identical fiber volumes, when some of the stiff nylon fibers were replaced by flexible polypropylene fibers, the efficiency was greatly improved with a 3mm slot. These tests were carried out with 1.68 mL of total fiber volume in 300 mL of the base fluid of Table 4, which had a SVF of 25 percent. For the fiber blend, the weight ratio of the stiff 280 micron nylon to the flexible 12.5 micron FM was 90 to 10. This synergy was observed with a wide range of fiber blends, ranging from 10 volume percent flexible/90 volume percent stiff to 90 volume percent flexible/10 volume percent stiff. It has been observed that, for these fibers and this PSD, the most robust ratio is 70 volume percent stiff fibers and 30 volume percent flexible fibers.

**Example 11. Stability of the fiber plugs under downhole conditions**

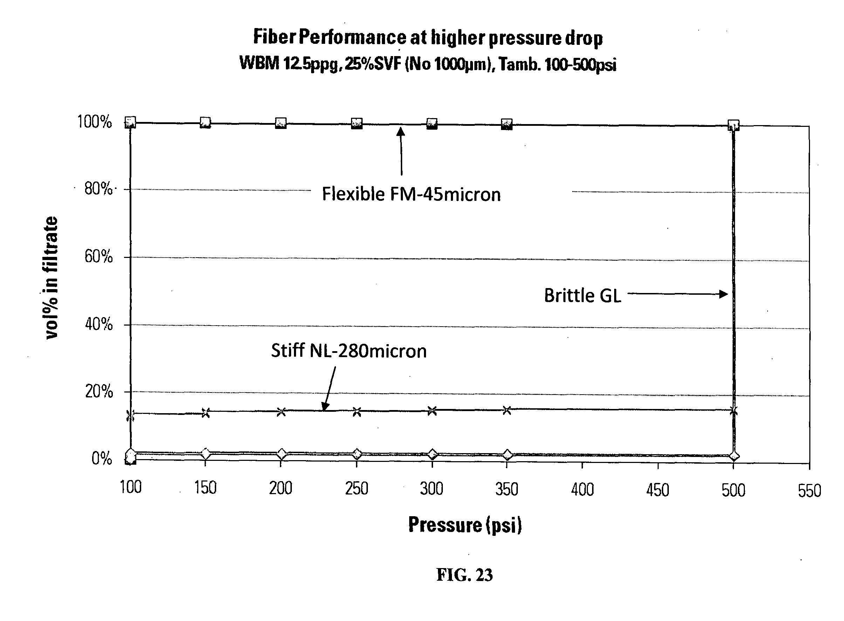

Increasing the differential pressure across the loss zone can render a fiber plug ineffective. For example, as shown in Figure 23, flexible polypropylene fibers, FM, were shown to be ineffective even under the relatively low pressure of 2.07 MPa (100 psi). Brittle glass fibers, GL, are stiffer than the polypropylene, therefore they provided fluid loss control for the 2 mm slot, but they failed when the differential pressure was raised to 3.45 MPa (500 psi). These tests were conducted with the fluid shown in Table 4, with a fiber concentration of 1.68 mL in 300 mL of the base fluid. On the other hand, the stiff 280 micron nylon fiber retained its efficiency over this pressure range throughout the tests. This means that stiff fiber plugs will be much more stable under downhole conditions, for example, if surging and/or swabbing were encountered, or simply if the ECD (effective circulation density) during drilling was increased.

Erosion of fiber plugs due to the wall shear stress imposed by the fluid flow must also be considered. A flow loop equipped with a grid that had thirty 3 mm holes was built to simulate zones taking fluids downhole. The fluids with fibers and solids were pumped across the grid and the filtrate exited the flow loop in a direction perpendicular to the flow direction in the loop as shown below.

In experiments in which the grid was plugged, the pumping was stopped and then resumed at a higher rate to determine the plug resistance to the wall shear stress imposed by the fluid flow. Under the dynamic flow conditions, the GL fibers were sufficient to plug the 3 mm holes of the grid at a pump rate of 378 L/min (100 gpm). However, when pumping was resumed at 756 L/min (200 gpm), the plugs were quickly eroded away by the flow (the wall shear stress was estimated to be 35 Pa). For a blend of stiff 280 micron nylon fibers (TYNEX™) and 12.5 micron flexible FM fibers (SPECTER™) , the 3 mm holes were also plugged readily at 378 L/min (100 gpm). However, when pumping was resumed at 756 L/min (200 gpm), there was no sign of erosion and the plug was stable and no fluid loss was observed. The presence of stiff fiber strengthened the plugs and thus increased the overall resistance against erosion (as shown in Table 14). The total fiber concentration for these tests was fixed at 1.68 mL per 300 mL of the base fluid of Table 4.

**Table 9: Comparison of plug stability under dynamic flow conditions.**

| Fiber [mL] | Flow Rate [GPM] | Grid with 2 mm holes | Wall shear stress, Pa | Behavior |
|---|---|---|---|---|
| Glass [1.68] | 200 | Plugged | 35 | Plug dislodged immediately from the grid |
| Blend of Stiff and Flexible [1.68 mL] | 200 | Plugged | 35 | Plugs were stable and could not be dislodged |

**Claims**

1.  A method of blocking fluid flow through a pathway in a subterranean formation penetrated by a wellbore comprising selecting compositions, concentrations and dimensions of stiff fibers and solid plugging particles, preparing a blocking fluid comprising the stiff fibers and a blend of the solid plugging particles, and forcing the blocking fluid into the pathway.

2.  The method of claim 1 wherein the stiff fibers form a mesh across the pathway and the solid particles plug the mesh and block fluid flow.

3.  The method of claim 1 wherein the stiff fibers have a Young's Modulus of from about 0.5 to about 100 GPa, preferably from about 1 to about 80 GPa.

4.  The method of claim 1 wherein the stiff fibers have a shortest cross-sectional distance of from about 80 to about 450 microns.

5.  The method of claim 1 wherein the stiff fibers have a length of from about 5 to about 24 mm.

6.  The method of claim 1 wherein the stiff fibers have a value of the parameter

$$Ed^4/WL^3$$

in which E is the modulus, d is the diameter, W is the force causing a deflection, and L is the length, of from about 2 to about 400,000 times the value of that parameter for a fiber having a modulus of 65 GPa, a diameter of 20 microns, and a length of 12 mm.

7.  The method of claim 1 wherein the stiff fiber concentration is from about 2.85 kg/m$^3$ to about 42.8 kg/m$^3$.

8.  The method of claim 1 wherein the fluid further comprises fibers that are selected from non-stiff fibers, differing stiff fibers, or both.

9.  The method of claim 8 wherein the total fiber concentration is from about 2.85 to about 42.8 kg/m$^3$.

10. The method of claim 8 wherein the fluid comprises a mixture of stiff fibers and non-stiff fibers.

**11.** The method of claim 10 wherein the non-stiff fibers have a Young's Modulus of from about 0.5 to about 10 GPa.

**12.** The method of claim 10 wherein the non-stiff fibers have a shortest cross-sectional distance of from about 10 to about 100 microns.

**13.** The method of claim 1 wherein the concentration or composition of the stiff fibers is varied.

**14.** The method of claim 1 wherein the blocking fluid comprises mica.

**15.** The method of claim 1 wherein the solid plugging particles comprise calcium carbonate.

**16.** The method of claim 1 wherein the pathway has one dimension across it of at least about 1 mm.

**17.** The method of claim 1 wherein the pathway is a hydraulic fracture and the fluid flow is blocked away from the wellbore.

FIG. 1

FIG. 2

Fig. 3

FIG. 4

FIG. 5

FIG. 6

FIG. 7

EP 2 261 458 A1

FIG. 8

FIG. 9

**FIG. 10**

EP 2 261 458 A1

FIG. 11

FIG. 12

**FIG. 13**

**Fibers performance under 500psi direct**

FIG. 14

EP 2 261 458 A1

**Effect of higher fiber concentration**

FIG. 15

## Stiff fiber Performance with varying SVF -3mm Slot

**FIG. 16**

EP 2 261 458 A1

Coarse particles improve bridging with stiff fibers

FIG. 17

EP 2 261 458 A1

**Platelike Materials to improve bridging**

R1 (1.34mL)

R1 (1.34mL) + Mica (2.36MmL)

%Vol in filtrate

Pressure (psi)

**FIG. 18**

FIG. 19

EP 2 261 458 A1

FIG. 20

EP 2 261 458 A1

**FIG. 21**

EP 2 261 458 A1

**Fiber Blend Effect**

Only NL-280micron fiber

NL-280micron fiber + FM-12.5micron fiber

vol% in Filtrate

Pressure (psi)

FIG. 22

**Fiber Performance at higher pressure drop**
WBM 12.5ppg, 25%SVF (No 1000μm), Tamb. 100-500psi

FIG. 23

EP 2 261 458 A1

Europäisches
Patentamt

European
Patent Office

Office européen
des brevets

## EUROPEAN SEARCH REPORT

**Application Number**

EP 09 29 0413

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 172 011 B1 (CARD ROGER J [US] ET AL) 9 January 2001 (2001-01-09) <br> * column 5, lines 13-55 * <br> * column 6, line 8 - column 7, line 5 * <br> * the whole document * <br> ----- | 1-17 | INV. <br> E21B21/00 <br> E21B33/138 <br> E21B43/267 |
| A | WO 2006/082359 A1 (HALLIBURTON ENERGY SERV INC [US]; CURTIS PHILIP ANTHONY [GB]; TODD BRA) 10 August 2006 (2006-08-10) <br> * page 15, paragraph 3 * <br> ----- | 14-15 | |
| A | US 2006/157248 A1 (HOEFER ANN M [US] ET AL HOEFER ANN M W [US] ET AL) 20 July 2006 (2006-07-20) <br> * paragraphs [0021], [0133] * <br> * the whole document * <br> ----- | 1 | |
| A | US 5 782 300 A (JAMES SIMON GARETH [US] ET AL) 21 July 1998 (1998-07-21) <br> * column 7, line 39 - column 7, line 55 * <br> * the whole document * <br> ----- | 1 | TECHNICAL FIELDS SEARCHED (IPC) |
| A | US 6 632 527 B1 (MCDANIEL ROBERT R [US] ET AL) 14 October 2003 (2003-10-14) <br> * column 9, line 1 - column 10, line 20 * <br> * the whole document * <br> ----- | 1 | E21B |

The present search report has been drawn up for all claims

| Place of search | Date of completion of the search | Examiner |
|---|---|---|
| The Hague | 29 October 2009 | van Berlo, André |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

&: member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 09 29 0413

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2009

| Patent document cited in search report | | Publication date | Patent family member(s) | | Publication date |
|---|---|---|---|---|---|
| US 6172011 | B1 | 09-01-2001 | NONE | | |
| WO 2006082359 | A1 | 10-08-2006 | AR | 053666 A1 | 16-05-2007 |
| US 2006157248 | A1 | 20-07-2006 | AR | 058588 A1 | 13-02-2008 |
| | | | WO | 2007072401 A2 | 28-06-2007 |
| US 5782300 | A | 21-07-1998 | NONE | | |
| US 6632527 | B1 | 14-10-2003 | US | 2002048676 A1 | 25-04-2002 |

EPO FORM P0459

For more details about this annex : see Official Journal of the European Patent Office, No. 12/82